(19) Europäisches Patentamt

European Patent Office

Office européen des brevets

(11) **EP 3 614 647 B1**

(12) **EUROPEAN PATENT SPECIFICATION**

(45) Date of publication and mention
of the grant of the patent:
**24.06.2026 Bulletin 2026/26**

(21) Application number: **19192418.2**

(22) Date of filing: **19.08.2019**

(51) International Patent Classification (IPC):
*H04W 4/38* (2018.01)  *H04W 4/70* (2018.01)
*H04L 67/12* (2022.01)

(52) Cooperative Patent Classification (CPC):
**H04L 67/12; H04W 4/38; H04W 4/70**

(54) **SYSTEM AND METHOD FOR IDENTIFYING CONNECTED ELECTRONIC DEVICES**

SYSTEM UND VERFAHREN ZUR IDENTIFIZIERUNG VERBUNDENER ELEKTRONISCHER
VORRICHTUNGEN

SYSTÈME ET PROCÉDÉ PERMETTANT D'IDENTIFIER DES DISPOSITIFS ÉLECTRONIQUES
CONNECTÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2018 US 201816107066**

(43) Date of publication of application:
**26.02.2020 Bulletin 2020/09**

(73) Proprietor: **Vocollect, Inc.
Pittsburgh,
Pennsylvania 15235 (US)**

(72) Inventor: **BYRNE, Graham Peter
Morris Plains NJ 07950 (US)**

(74) Representative: **Haseltine Lake Kempner LLP
Cheapside House
138 Cheapside
London EC2V 6BJ (GB)**

(56) References cited:
**US-A1- 2013 111 039    US-A1- 2014 173 439
US-A1- 2017 337 753    US-A1- 2018 075 721
US-A1- 2018 109 889**

EP 3 614 647 B1

## Description

### BACKGROUND

Applicant has identified a number of deficiencies and problems associated with conventional electronic devices. Through applied effort, ingenuity, and innovation, many of these identified problems have been solved by developing solutions that are included in embodiments of the present disclosure, many examples of which are described in detail herein.

US 2017/337753 describes a vehicle accident reporting system which identifies a sudden event when a measured acceleration of the vehicle exceeds a predefined maximum acceleration or deceleration indicative of an accident. A notification that a sudden event has occurred is transmitted to an accident management hub, the notification including a vehicle identification, current video data, and GPS coordinates.

US 2018/109889 A1 describes subject matter which may relate to hearing aids, and more particularly, to adjusting one or more parameters for one or more hearing aids based, at least in part, on one or more detected audio interactions between a user and one or more second parties. US2018/075721A1 discloses a system for detecting and reporting the separation of two entities including where the entities are people or items. In some implementations, the system performs separation checking triggered by movement conditions of respective entities, or by checking of the state of an entity upon separation, and additionally adapts checking methods according to a condition. US 2013/111039 A1 discloses methods and systems for sharing or a hand-off of program content or a user session of a user device, wherein a user device determines which of a plurality of discovered devices from which a short range wireless signal including a defined key was received and provides a list of discovered devices with which a session may be shared over the computer network with the user device based on this determination. US 2014/173439 A1 discloses a method for tracking a location of an object using a mobile communication device having a processor and a display, which includes generating, by the processor, a graphical user interface including a first button representing the object, a second button displaying a signal strength of the object, and a third button displaying an alarm status of the object, wherein the method includes displaying, in response to actuation of the first button, a settings menu screen associated with the object, displaying, in response to actuation of the second button, an alarm sensitivity menu associated with the object, and toggling on and off, in response to actuation of the third button, an alarm associated with the object.

### BRIEF SUMMARY

The invention is defined in the independent claims, to which reference should now be made. Advantageous features are set out in the sub claims. Exemplary embodiments of the present disclosure relate generally to electronic devices and, more particularly, to a system and a method for identifying connected electronic devices.

In an example embodiment, the communication network interface is further configured to utilize a second communication protocol to communicate with a server, wherein the first communication protocol is different from the second communication protocol.

In an example embodiment, the one or more parameters associated with the primary electronic device comprise at least one of motion parameters, orientation parameters, and/or audio parameters.

In an example embodiment, the processor is configured to detect a predefined motion and/or a predefined orientation of the primary electronic device based on the one or more measurements of the at least one of motion parameters and/or orientation parameters. The predefined motion and/or the predefined orientation of the primary electronic device indicates the event on the primary electronic device.

In an example embodiment, the one or more of sensors comprise one or more first sensors configured to determine the at least one of motion parameters and/or orientation parameters.

In an example embodiment, the one or more sensors comprise a second sensor configured to detect an audio signal.

In an example embodiment, the audio signal corresponds to a speech input provided by a worker using the primary electronic device.

In an example embodiment, the processor is further configured to determine whether the speech input corresponds to a second command provided by the worker using the primary electronic device. The processor is further configured to determine the reception of the second command through the speech input as the event.

In an example embodiment, the audio signal corresponds to a sound generated in an environment around the primary electronic device. The processor is configured to determine whether the audio signal corresponds to at least one audio template of one or more audio templates. The processor is configured to detect the event on the primary electronic device in an instance in which the audio signal corresponds to the at least one audio template.

In an example embodiment, the primary electronic device is devoid of a display screen.

In an example embodiment, the method further comprises detecting a predefined motion and/or a predefined orientation of the primary electronic device based on the one or more measurements of the at least one of motion parameters and/or orientation parameters, wherein detection of the predefined motion and/or the predefined orientation of the primary electronic device corresponds to the event on the primary electronic device.

In an example embodiment, the one or more of sensors comprise one or more first sensors configured to determine the at least one of the motion parameters and/or the orientation parameters.

The above summary is provided merely for purposes of summarizing some example embodiments to provide a basic understanding of some aspects of the invention. Accordingly, it will be appreciated that the above-described embodiments are merely examples and should not be construed to narrow the scope of the invention.

## BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:

FIG. 1 illustrates a system architecture schema where various embodiments of the present disclosure may be implemented, according to one or more embodiments described herein;

FIG. 2 illustrates a block diagram of a primary electronic device, according to one or more embodiments described herein;

FIG. 3 illustrates a flowchart of a method for operating the primary electronic device, according to one or more embodiments described herein;

FIG. 4 illustrates a flowchart of a method for detecting the event on the primary electronic device, according to one or more embodiments described herein;

FIG. 5A and FIG. 5B illustrate example methods of detecting the event based on the one or more measurements of the orientation parameters of the primary electronic device, according to one or more embodiments described herein;

FIG. 6 illustrates a flowchart of a method for detecting an event, according to one or more embodiments described herein;

FIG. 7 illustrates a flowchart of a method for detecting the predefined motion of the primary electronic device, according to one or more embodiments described herein;

FIG. 8 illustrates a flowchart of another method for detecting the predefined motion of the primary electronic device, according to one or more embodiments described herein;

FIG. 9 illustrates an example method of detecting the predefined motion of the primary electronic device, according to one or more embodiments described herein;

FIG. 10 illustrates a flowchart of another method for detecting the predefined motion of the primary electronic device, according to one or more embodiments described herein;

FIG. 11 illustrates a flowchart of yet another method for detecting the predefined motion of the primary electronic device, according to one or more embodiments described herein;

FIG. 12 illustrates an example method to detect the predefined motion of the primary electronic device, according to one or more embodiments described herein;

FIG. 13 illustrates a flowchart of another method for detecting the event on the primary electronic device, according to one or more embodiments described herein;

FIG. 14 illustrates a block diagram of a secondary electronic device, according to the one or more embodiments described herein; and

FIG. 15 illustrates a flowchart of a method for detecting another event on the secondary electronic device, according to one or more embodiments described herein.

## DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout. Terminology used in this patent is not meant to be limiting insofar as devices described herein, or portions thereof, may be attached or utilized in other orientations.

The term "comprising" means including but not limited to, and should be interpreted in the manner it is typically used in the patent context. Use of broader terms such as "comprises," "includes," and "having" should be understood to

## EP 3 614 647 B1

provide support for narrower terms such as "consisting of," "consisting essentially of," and "comprised substantially of."

The phrases "in one embodiment," "according to one embodiment," and the like generally mean that the particular feature, structure, or characteristic following the phrase may be included in at least one embodiment of the present disclosure, or may be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

The term "electronic device" may correspond to a device that includes suitable logic and/or circuitry that may enable the device to perform a predetermined operation. For example, the electronic device may include a processor, one or more sensors, one or more communication network interfaces and one or more programs that may enable the electronic device to perform the predetermined operation such as, but not limited to, generating notifications, capturing an image, printing content on a media such as a paper, listening to an audio, performing complex calculations, transmitting data to other computing devices and/or other electronic devices. Some examples of the electronic device may include, but are not limited to, a computing device, a voice recorder, a printer, a headset, a bar code scanner, an image capturing device (*e.g.*, camera), a portable computing device such as a mobile phone or a PDA, and/or any other electronic device.

Technical challenges and problems exist in environments such as warehouses and material handling systems. A worker may have to operate various electronic devices simultaneously to perform a predetermined operation. For example, the worker may simultaneously operate a headset, an indicia scanner, and a printer to perform a task in the warehouse. Usually, such electronic devices are connected with each other (for synchronous operation) over a communication network such as Bluetooth®, Wi-Fi, ZigBee, mobile networks such as 2G, 3G, 4G, 5G, CDMA, EVDO, etc.

Because many workers work throughout the warehouse, in certain scenarios (such as after a work break), the electronic devices may get mixed up. For example, the electronic devices connected to different networks may be placed together, such as on a dining table in a break room of the warehouse. After the break, the worker may pick up an indicia scanner that is not connected on same communication network as the headset or the printer that the worker is using. In such scenario, if the worker utilizes the indicia scanner to decode an indicia, the indicia scanner may transmit the decoded indicia data on a different communication network. Thus, the headset and the printer (being used by the worker) may never receive the decoded indicia data. Therefore, such scenario may lead to erroneous data capture and recording, which may further lead to loss in efficiency and productivity of the warehouse.

In accordance with example embodiments illustrated herein, a primary electronic device is disclosed. The primary electronic device establishes one or more connections with one or more secondary electronic devices. In some examples, the primary electronic device may correspond to a master electronic device that may, in some examples, act as a communication gateway or a communication router for the one or more secondary electronic devices. For example, the primary electronic device may include a first communication network interface and a second communication network interface. In some examples, the primary electronic device may utilize the first communication network interface to connect to the one or more secondary electronic devices using a first communication protocol such as, but not limited to, Bluetooth®, Wi-Fi, ZigBee, and/or the like. In some examples, the primary electronic device may utilize the second communication network interface to connect to a computing device such as an application server. In some examples, the primary electronic device may be configured to receive data/information from the one or more secondary electronic devices over the first communication network interface. Thereafter, the primary electronic device may be configured to transmit the received data/information (received from the one or more secondary electronic devices over the first communication network interface) to the computing device over the second communication network interface. In some example implementations, the primary electronic device and the one or more secondary electronic devices, when connected with each other, together form a pico-network. In the pico-network, the primary electronic device corresponds to the master electronic device, while the one or more secondary electronic devices correspond to slave electronic devices. In some examples, the primary electronic device and the one or more secondary electronic devices may connect with each other using any other Personal Area Network (PAN) protocol.

In an example embodiment, the primary electronic device may include one or more sensors that are configured to determine one or more measurements of one or more parameters associated with the primary electronic device. In some examples, the one or more parameters include at least one of motion parameters, audio parameters, and/or orientation parameters. Further, to determine the one or more measurements of the orientation parameters and the motion parameters, the one or more sensors may include one or more first sensors such as accelerometer, gyroscope, and magnetometer that may be configured to determine the one or more measurements of the motion parameters and/or orientation parameters. In an example embodiment, based on the one or more measurements of the one or more parameters, a processor in the primary electronic device may be configured to detect an event. In an example embodiment, the event may correspond to at least the predefined motion of the primary electronic device 102. For example, a worker using the primary electronic device may hold the primary electronic device and may shake the primary electronic device. In such an implementation, the one or more first sensors in the primary electronic device may be configured to determine the one or more measurements of the motion parameters such as acceleration of the primary electronic device and deceleration of the primary electronic device. Based on the one or more measurements of the deceleration and acceleration of the primary electronic device, the processor may detect the event (e.g., shaking of the primary electronic device) on the primary electronic device.

Upon detection of the event, the primary electronic device may transmit a first command to the one or more secondary electronic devices (connected to the primary electronic device) using the first communication network interface. On receiving the first command, each of the one or more secondary electronic devices may generate a notification. In an example embodiment, the notification may correspond to an audio and/or a visual indicator that may allow the worker to identify the one or more secondary electronic devices connected with the primary electronic device. For example, a secondary electronic device such as a scanner may generate a flashing light signal via its aimer as a notification. A secondary electronic device such as a printer may generate a flashing light signal via its LED light, generate a beeping sound, and/or cause the paper to move in its feeder as a notification. A secondary device such as a headset may generate a sound via its speaker or generate a flashing light signal via its LED light as a notification.

In some examples, for the worker to identify the one or more secondary electronic devices connected to the primary electronic device, the worker moves the primary electronic device in the predetermined manner. Based on the movement, the one or more secondary electronic devices that are connected to the primary electronic device may generate the audio/visual notification, allowing the worker to easily identify the one or more secondary electronic devices among the various devices (for example placed on the break room table). Hence, various embodiments of the present invention provide technical advantages that allow fast, reliable identification of secondary electronic devices that are connected to the primary electronic device, avoiding the situation where the one or more secondary electronic devices may get mixed up with devices connected to a different communication network.

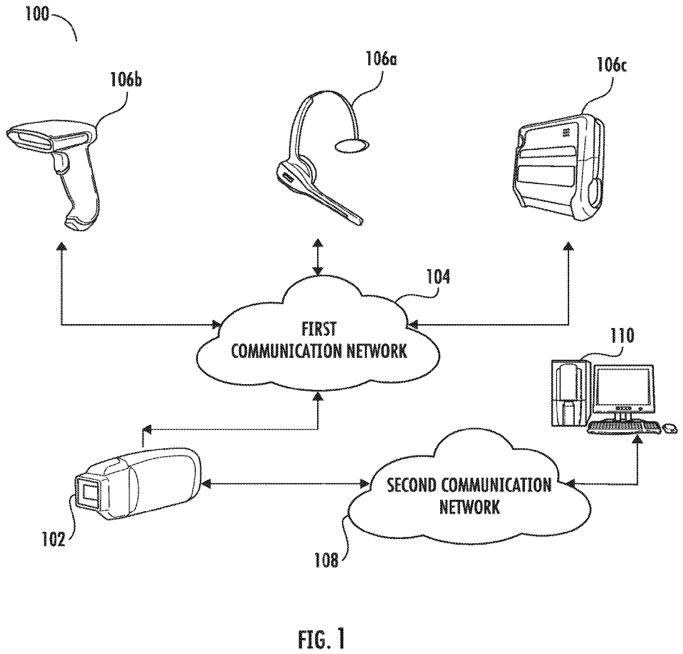

FIG. 1 illustrates a system environment 100 where various embodiments of the present disclosure may be implemented, according to one or more embodiments described herein. The system environment 100 may refer to environments related to, but not limited to, manufacturing of the items, inventory storage of the items, packaging and unpackaging of the items, preparing customer orders, recording items related information based on scanning and identification of the items, and shipment processing (including shipping and logistics distribution of the items). In such environments, many workers perform different operations, which may involve handling of the items during various phases (including, but not limited to, accumulation, sortation, scanning and identification, packaging and shipment preparation etc.) of overall operation cycle of the system environment 100. For example, the workers are involved in manual packaging and unpackaging of the items while preparing customer orders for shipping. In another example, the workers may handle placing of the items in an accumulation zone of a conveyor system for automated packaging of the items. In some environments, workers may use electronic devices (e.g., a primary electronic device 102 and the one or more secondary electronic devices 106a, 106b, and 106c) for performing various aforementioned operations (e.g., scanning and identification of labels, such as barcodes, RFID tags, etc. affixed on the items for shipment preparation). Thus, in these environments, many workers are usually involved in performing various operations involving handling items and interacting with different machines, such as an accumulator, a dimensioner (for determining the dimensions of an object), a scanning and identification device, etc., for shipment processing and transportation. As illustrated in FIG. 1, the system environment 100 includes a primary electronic device 102, a first communication network 104, one or more secondary electronic devices 106a, 106b and 106c (hereinafter referred to as secondary electronic devices 106), a second communication network 108, and a computing device 110. In an example embodiment, the secondary electronic devices 106 are coupled to the primary electronic device 102 through the first communication network 104. Further, the computing device 110 is coupled to the primary electronic device 102 through the second communication network 108.

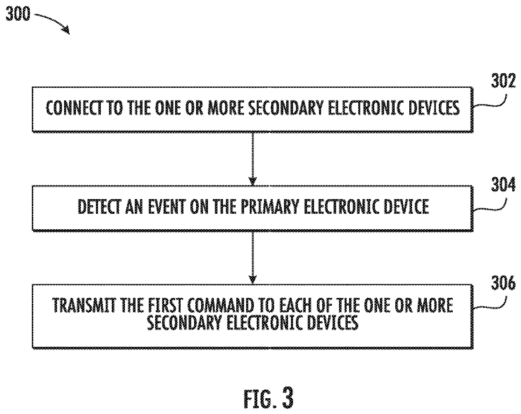

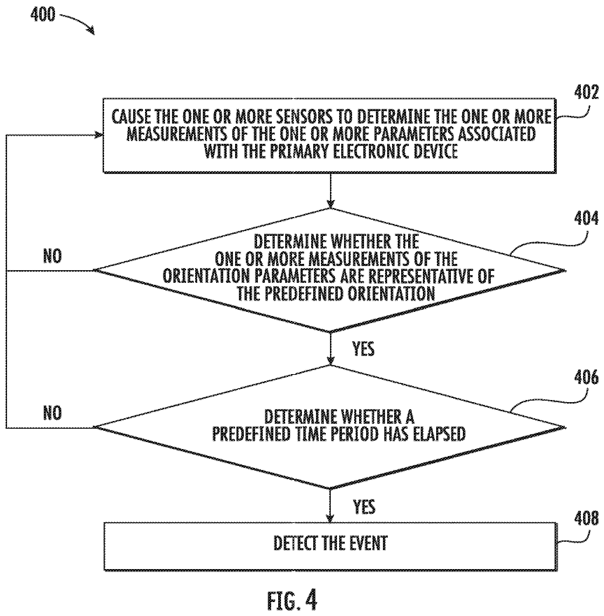

The primary electronic device 102 may correspond to an electronic device that includes suitable logic and/or circuitry that may enable the primary electronic device 102 to connect to the secondary electronic devices 106 over the first communication network 104, as is further described in conjunction with FIG. 3. In some examples, the primary electronic device 102 may receive data/information from the secondary electronic devices 106 over the first communication network 104. Further, the primary electronic device 102, in some examples, may be configured to transmit the received data/information to the computing device 110 over the second communication network 108. In an example embodiment, the primary electronic device 102 may be configured to determine one or more measurements of one or more parameters associated with the primary electronic device 102, as is further described in conjunction with FIGS. 4, 6, 7, 8, 10, and 11. In some example embodiments, the one or more parameters associated with the primary electronic device 102 may include, but are not limited to, motion parameters, orientation parameters, and/or audio parameters. In an example embodiment, based one or more measurements of one or more parameters associated with the primary electronic device 102, the primary electronic device 102 may be configured to detect an event, as is further described in conjunction with FIGS. 4, 5, and 13.

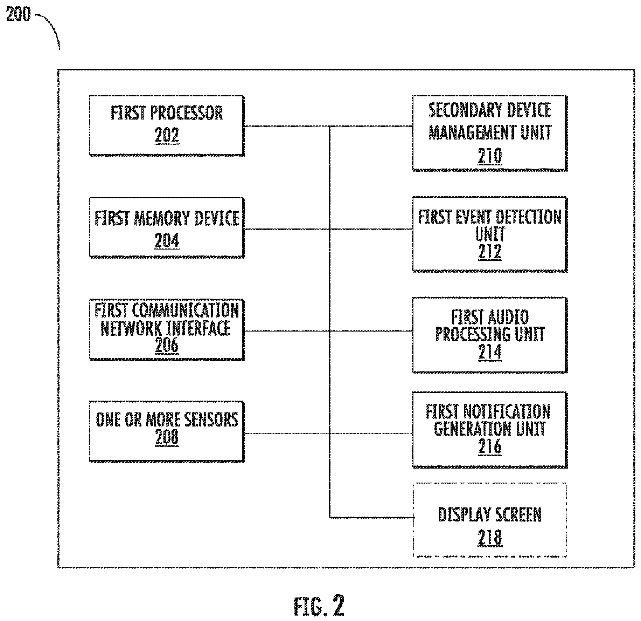

In an example embodiment, the event may correspond to at least one of a predefined motion of the primary electronic device 102, a predefined orientation of the primary electronic device 102, reception of a predefined speech input from the worker using the primary electronic device 102, and/or reception of a predefined audio signal. Based on the detection of the event, the primary electronic device 102 may be configured to transmit a first command to each of the secondary electronic devices 106 over the first communication network 104, as is further described in FIG. 3. The structure and operation of the primary electronic device 102 is described in conjunction with FIG. 2.

The first communication network 104 corresponds to a medium through which content and messages flow between various devices in the system environment (*e.g.*, the primary electronic device 102 and the secondary electronic devices 106). Examples of the first communication network 104 may include, but are not limited to, a Wireless Fidelity (Wi-Fi) network, a Piconet, a Personal Area Network (PAN), Zigbee, and a Scatternet. In some examples, the first communication network 104 may be a short range wireless network in which the primary electronic device 102 and the secondary electronic devices 106 may connect with each other using one or more communication protocols such as, but are not limited to, Wi-Fi, Bluetooth, Bluetooth low energy (BLE), Zigbee, and Z-Wave. In some examples, the scope of the disclosure is not limited to the first communication network 104 being a short range wireless network. In an example embodiment, the secondary electronic devices 106 may connect to the primary electronic device 102 using other various wired and wireless communication protocols such as Transmission Control Protocol and Internet Protocol (TCP/IP), User Datagram Protocol (UDP), and 2G, 3G, or 4G communication protocols.

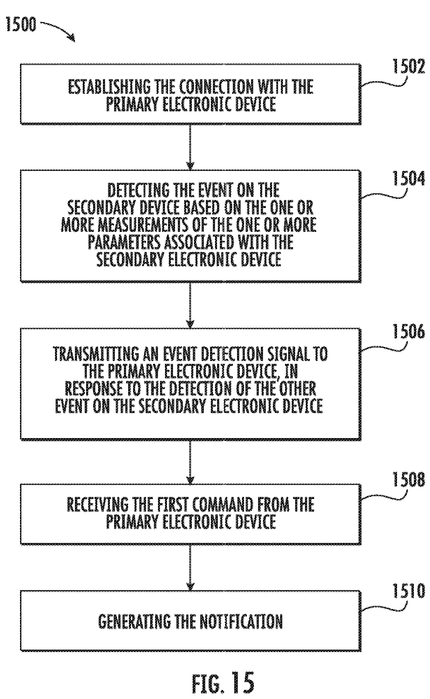

The secondary electronic devices 106, may include suitable logic and/or circuitry that may enable each of the secondary electronic devices 106 to perform a predetermined operation. For example, the secondary electronic devices 106 may be configured to connect to the primary electronic device 102 over the first communication network 104, as is further described in conjunction with FIG. 3. In some examples, the secondary electronic devices 106 may receive one or more commands from the primary electronic device 102 to perform a task. For example, the secondary electronic devices 106 may receive the first command from the primary electronic device 102, as is further described in conjunction with FIG. 3. Based on the receipt of the first command, the secondary electronic devices 106 may be configured to generate a notification, as is further described in conjunction with FIG. 15.

In some examples, the scope of the disclosure is not limited to the secondary electronic devices 106 only generating the notification based on the receipt of the first command. In an example embodiment, the secondary electronic devices 106 may receive commands to perform other operations. For example, where a secondary electronic device (e.g., 106c) of the secondary electronic devices 106 is a printer, the secondary electronic device 106c may be configured to receive a command from the primary electronic device 102 to print content on a media such as a paper. In another example, where the secondary electronic device (e.g., 106b) of the secondary electronic devices 106 is an indicia scanner, the secondary electronic device 106b may be configured to receive a command to capture an image. In yet another example, where a secondary electronic device (e.g., 106a) of the secondary electronic devices 106 corresponds to a headset, the secondary electronic device 106a may receive an audio signal as a command, based on which the secondary electronic device 106a may further generate an audio based on receipt of the command.

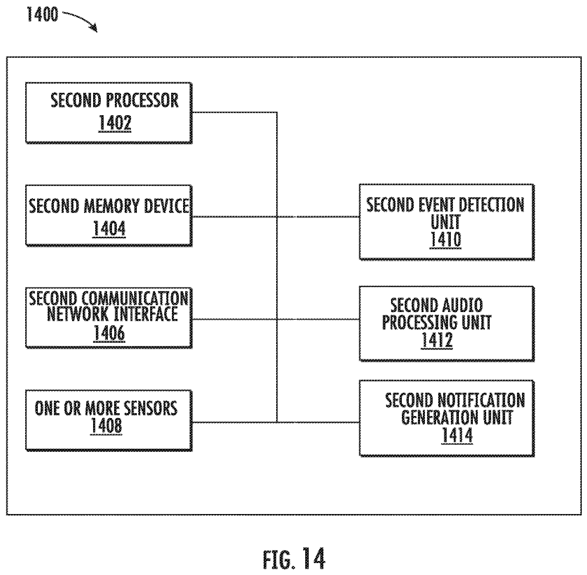

In some examples, the scope of the disclosure is not limited to the secondary electronic devices 106 corresponding to the printer device, the indicia scanner, or the headset. In some examples, the secondary electronic devices 106 may correspond to any other electronic device that may have the capability of connecting to the primary electronic device 102 over the first communication network 104 and may be capable of performing one or more operations based on receipt of the one or more commands from the primary electronic device 102. The structure and operation of the secondary electronic devices 106 are described later in conjunction with FIG. 14.

The second communication network 108 corresponds to a medium through which content and messages flow between various devices in the system environment 100 (e.g., the computing device 110 and the primary electronic device 102). Examples of the second communication network 108 may include, but are not limited to, a Wireless Fidelity (Wi-Fi) network, a Wireless Area Network (WAN), a Local Area Network (LAN), or a Metropolitan Area Network (MAN). Various devices in the system environment 100 can connect to the second communication network 108 in accordance with various wired and wireless communication protocols such as Transmission Control Protocol and Internet Protocol (TCP/IP), User Datagram Protocol (UDP), and 2G, 3G, or 4G communication protocols.

In various embodiments, the communication protocol of the first communication network 104 is different from the communication protocol of the second communication network 108. For example, the first communication network 104 may be a Bluetooth network, while the second communication network 108 may be a Wi-Fi network.

In an example embodiment, the computing device 110 may correspond to an application server that may be coupled to the primary electronic device 102 over the second communication network 108. The computing device 110 may be configured to receive the data/information from the primary electronic device 102. As discussed above, the secondary electronic devices 106, may be configured to generate and transmit the data/information to the primary electronic device 102, which further transmits the received data/information to the computing device 110. In some examples, the computing device 110 may be configured to transmit instructions to the primary electronic device 102 based on which the worker using the primary electronic device 102 may perform a task (e.g., scan a barcode). In an example embodiment, the computing device 110 may be realized through various application servers such as, but not limited to, Base4 Application server, Java based application server, and TNAPS application server.

FIG. 2 illustrates a block diagram 200 of the primary electronic device 102, according to one or more embodiments described herein. The primary electronic device 102 includes a first processor 202, a first memory device 204, a first communication network interface 206, one or more sensors 208, a secondary device management unit 210, a first event detection unit 212, a first audio processing unit 214, and a first notification generation unit 216. In an example embodiment, the first processor 202 may be communicatively coupled to each of the first memory device 204, the first communication network interface 206, the one or more sensors 208, the secondary device management unit 210, the first event detection unit 212, the first audio processing unit 214, and the first notification generation unit 216.

The first processor 202 may be embodied as a means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit (ASIC) or field programmable gate array (FPGA), or some combination thereof. Accordingly, although illustrated in FIG. 2 as a single processor, in an embodiment, the first processor 202 may include a plurality of processors and signal processing modules. The plurality of processors may be embodied on a single electronic device or may be distributed across a plurality of electronic devices collectively configured to function as the circuitry of the primary electronic device 102. The plurality of processors may be in operative communication with each other and may be collectively configured to perform one or more functionalities of the circuitry of the primary electronic device 102, as described herein. In an example embodiment, the first processor 202 may be configured to execute instructions stored in the first memory device 204 or otherwise accessible to the first processor 202. These instructions, when executed by the first processor 202, may cause the circuitry of the primary electronic device 102 to perform one or more of the functionalities, as described herein.

Whether configured by hardware, firmware/software methods, or by a combination thereof, the first processor 202 may include an entity capable of performing operations according to embodiments of the present disclosure while configured accordingly. Thus, for example, when the first processor 202 is embodied as an ASIC, FPGA or the like, the first processor 202 may include specifically configured hardware for conducting one or more operations described herein. Alternatively, as another example, when the first processor 202 is embodied as an executor of instructions, such as may be stored in the first memory device 204, the instructions may specifically configure the first processor 202 to perform one or more algorithms and operations described herein.

Thus, the first processor 202 used herein may refer to a programmable microprocessor, microcomputer or multiple processor chip or chips that can be configured by software instructions (applications) to perform a variety of functions, including the functions of the various embodiments described above. In some devices, multiple processors may be provided dedicated to wireless communication functions and one processor dedicated to running other applications. Software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. The memory can also be located internal to another computing resource (e.g., enabling computer readable instructions to be downloaded over the Internet or another wired or wireless connection).

The first memory device 204 may include suitable logic, circuitry, and/or interfaces that are adapted to store a set of instructions that is executable by the first processor 202 to perform predetermined operations. Some of the memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an embodiment, the first memory device 204 may be integrated with the first processor 202 on a single chip, without departing from the scope of the disclosure.

The first communication network interface 206 may correspond to a communication network interface that may facilitate transmission and reception of messages and data to and from various devices over the first communication network 104 and the second communication network 108. For example, the first communication network interface 206 enables communication between the primary electronic device 102 and the computing device 110 over the second communication network 108. Additionally, or alternatively, the first communication network interface 206 enables the communication between the primary electronic device 102 and the secondary electronic devices 106 over the first communication network 104. Examples of the first communication network interface 206 may include, but are not limited to, an antenna, an Ethernet port, a USB port, a serial port, or any other port that can be adapted to receive and transmit data. The first communication network interface 206 transmits and receives data and/or messages in accordance with the various communication protocols, such as, Bluetooth, ZigBee, Z-Wave, I2C, TCP/IP, UDP, and 2G, 3G, 4G, or 5G communication protocols.

The one or more sensors 208 may include suitable logic and/or circuitry that may enable of the one or more sensors 208 to determine the one or more measurements of the one or more parameters associated with the primary electronic device 102, as is further described in conjunction with FIGS. 4, 6, 7, 8, 10, and 11. As discussed, the one or more parameters associated with the primary electronic device 102 may include, but are not limited to, the motion parameters, the orientation parameters, and/or the audio parameters. In some examples, the motion parameters associated with the primary electronic device 102 may include at least one of an acceleration of the primary electronic device 102, a deceleration of the primary electronic device 102, a speed of the primary electronic device 102, a rate of change of acceleration of the primary electronic device 102, and/or a rate of change of the deceleration of the primary electronic device 102. In an example embodiment, the orientation parameters of the primary electronic device 102 may include at least one of a pitch of the primary electronic device 102, a yaw of the primary electronic device 102, or a roll of the primary electronic device 102. In an example embodiment, the audio parameters may include an amplitude, a frequency, and a power spectrum of an audio signal detected by the one or more sensors 208. In some examples, to determine the one or more measurements of the motion parameters and the orientation parameters of the primary electronic device 102, the one or more sensors 208 may include one or more first sensors. Some examples of the one or more first sensors may include, but are not limited to, a gyroscope, a magnetometer, and/or an accelerometer.

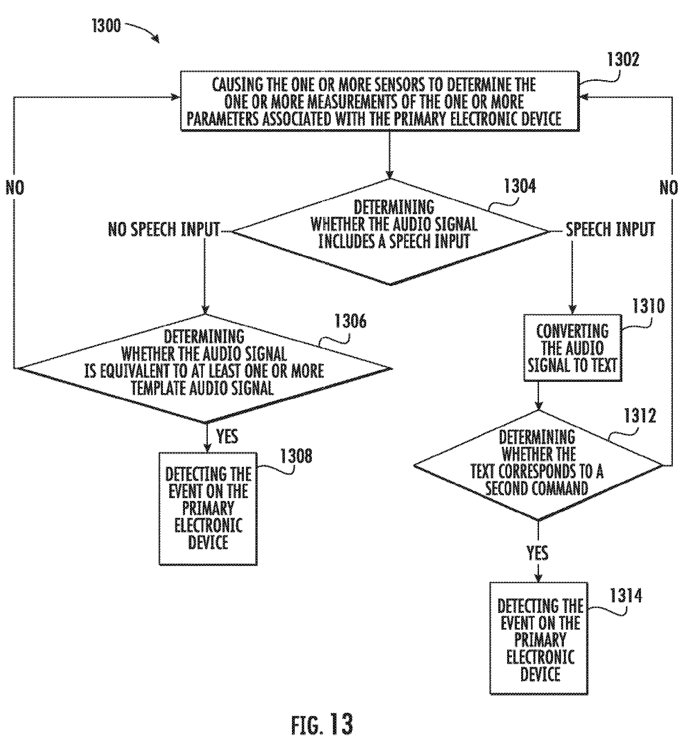

In an example embodiment, the one or more sensors 208 may include a second sensor that may be configured to detect an audio signal received by the primary electronic device 102. In some examples, the audio signal may correspond to a sound signal generated in the environment around the primary electronic device 102. In another example, the audio signal may correspond to a speech input provided by the worker using the primary electronic device 102. In an example embodiment, the second sensor may be configured to generate an electrical signal based on the detection of the audio signal. Thereafter, in some examples, the second sensor may be configured to determine the one or more measurements of the audio parameters (e.g. the amplitude, the frequency, and the power spectrum) associated with the audio signal, as is further described in conjunction with FIG. 13. In an example embodiment, the second sensor may determine the one or more measurements of the audio parameters as the one or more measurements of one or more characteristics (e.g., an amplitude, a frequency, and/or a power spectrum) of the electrical signal generated based on the detection of the audio signal. Some examples of the second sensor may include, but are not limited to, a microphone or any other sensor that may be capable of detecting the audio signal and generating a corresponding electrical signal.

In some examples, the scope of the disclosure is not limited to the one or more sensors 208 including the one or more first sensors and the second sensor. In an example embodiment, the one or more sensors 208 may further include a one or more third sensors that may correspond to one or more input devices such as, but are not limited to, a button, an image capturing device, a Radio Frequency (RF) reader, and/or the like. In some examples, the button may allow the worker to provide an input to perform a predetermined operation on the primary electronic device 102. For example, the predetermined operation on the primary electronic device 102 may include capturing of an image using the image capturing device, and/or reading of an RF tag using the RF reader. Further, the button may allow the worker to provide an input in a predetermined pattern. In some examples, the predetermined pattern may correspond to worker pressing the button for a predefined count of times and/or pressing the button for a predefined time period. In some examples, the image capturing device may correspond to a camera that is configured to capture an image of field of view of the image capturing device. In an example embodiment, the image capturing device may include an image sensor that may enable capturing of the image. In an example embodiment, the RF reader may correspond to a Radio Frequency Identification (RFID) reader to a Near Field Communication (NFC) reader that may be configured to read data stored in the RFID tags and/or the NFC tag, respectively.

The secondary device management unit 210 may include suitable logic, circuitry, and/or programs that may enable the secondary device management unit 210 to maintain a record of the secondary electronic devices 106, currently connected to the primary electronic device 102, as is further described in conjunction with FIG. 3. In an example embodiment, the record of the secondary electronic devices 106 may be stored in the first memory device 204. Further, in an example embodiment, the secondary device management unit 210 may be configured to transmit the one or more commands to the secondary electronic devices 106, as is further described in conjunction with FIG. 3. The secondary device management unit 210 may utilize other circuitries, such as the first processor 202 and first memory device 204, to perform these actions. However, it should also be appreciated that, in some embodiments, the secondary device management unit 210 may include a separate memory, processor, specially configured Field Programmable Gate Array (FPGA), or Application Specific Integrated Circuit (ASIC) for performing the functions described herein. The secondary device management unit 210 may be implemented using hardware components of the apparatus configured by either hardware or software for implementing these planned functions.

The first event detection unit 212 may include suitable logic, circuitry, and/or programs that may enable the first event detection unit 212 to detect the event on the primary electronic device 102. As discussed, the event on the primary electronic device 102 may correspond to at least one of the predefined motion of the primary electronic device 102, the predefined orientation of the primary electronic device 102, reception of the predefined speech input from the worker using the primary electronic device 102, and/or reception of the predefined audio signal. In an example embodiment, the first event detection unit 212 may be configured to detect the event on the primary electronic device 102 based on the one or more measurements of the one or more parameters associated with the primary electronic device 102, as is further described in conjunction with FIGS. 4, 6, 7, 8, 10, and 11. The first event detection unit 212 may utilize other circuitries, such as the first processor 202 and first memory device 204, to perform these actions. However, it should also be appreciated that, in some embodiments, the first event detection unit 212 may include a separate memory, processor, specially configured Field Programmable Gate Array (FPGA), or Application Specific Integrated Circuit (ASIC) for performing the functions described herein. The first event detection unit 212 may be implemented using hardware components of the apparatus configured by either hardware or software for implementing these planned functions.

The first audio processing unit 214 may include suitable logic, circuitry, and/or programs that may enable the audio processing unit 214 to process the audio signal detected by the second sensor. In some example implementations, the audio processing unit 214 may be configured to analyze the electrical signal (for example, generated by the second sensor based on the detected audio signal) to determine the one or more measurements of the audio parameters of the received audio signal. Based on the one or more measurements of the audio parameters, the audio processing unit 214 may be configured to determine whether the received audio signal corresponds to the predefined audio signal, as is further described in conjunction with FIG. 13. In another example, based on the one or more measurements of the audio parameters, the first audio processing unit 214 may be configured to determine whether the received audio signal corresponds to a predefined speech signal, as is further described in conjunction with FIG. 13. The first audio processing unit 214 may utilize other circuitries, such as the first processor 202 and first memory device 204, to perform these actions. However, it should also be appreciated that, in some embodiments, the first audio processing unit 214 may include a separate memory, processor, specially configured Field Programmable Gate Array (FPGA), or Application Specific Integrated Circuit (ASIC) for performing the functions described herein. The first audio processing unit 214 may be implemented using hardware components of the apparatus configured by either hardware or software for implementing these planned functions.

The first notification generation unit 216 may include suitable logic, circuitry, and/or programs that may enable the first notification generation unit 216 to generate a notification, as is further described in conjunction with FIG. 15. In some examples, the notification may correspond to an audio/visual notification such as, a generation of a predetermined sound signal, and/or turning ON or flashing an LED light on the primary electronic device 102 for a predetermined time period. The first notification generation unit 216 may utilize other circuitries, such as the first processor 202 and first memory device 204, to perform these actions. However, it should also be appreciated that, in some embodiments, the first notification generation unit 216 may include a separate memory, processor, specially configured Field Programmable Gate Array (FPGA), or Application Specific Integrated Circuit (ASIC) for performing the functions described herein. The first notification generation unit 216 may be implemented using hardware components of the apparatus configured by either hardware or software for implementing these planned functions.

**In** some examples, the primary electronic device 102 may optionally include a display screen 218 that may be configured to display content to the worker using the primary electronic device 102. The display screen 218 may be implemented using one or more technologies such as, but are not limited to, a Liquid Crystal Display (LCD), a Light Emitting Diode (LED), Organic LED (OLED).

In some embodiments, the primary electronic device 102 is devoid of the display screen 218. In such embodiment, the display screen 218 is excluded from the primary electronic device 102 due to a variety of reasons. For example, primary electronic device 102 may have a comparatively small form factor, thus lacking the space to provide a display screen. Further, the primary electronic device 102 that is devoid of the display screen 218 may be comparatively less bulky and easier for the worker to carry around the warehouse.

The primary electronic device 102 may further include additional components that are not shown in the block diagram 200. For example, the primary electronic device 102 may include a LED light, a vibrator, and the like, each of which may be configured to communicatively couple with various components of the primary electronic device 102 and facilitate the primary electronic device 102 to perform certain command-specific operations.

The operations of the primary electronic device 102 are further described in conjunction with FIG. 3.

FIGS. 3, 4, 6-8, 10, 11, and 13 illustrate example flowcharts of the operations performed by an apparatus, such as the primary electronic device 102 of FIG. 1 and FIG. 2 in accordance with example embodiments of the present invention. It will be understood that each block of the flowcharts, and combinations of blocks in the flowcharts, may be implemented by various means, such as hardware, firmware, one or more processors, circuitry and/or other devices associated with execution of software including one or more computer program instructions. For example, one or more of the procedures described above may be embodied by computer program instructions. In this regard, the computer program instructions which embody the procedures described above may be stored by a memory of an apparatus employing an embodiment of the present invention and executed by a processor in the apparatus. As will be appreciated, any such computer program instructions may be loaded onto a computer or other programmable apparatus (e.g., hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of FIGS. 3, 4, 6-8, 10, 11, and 13, when executed, convert a computer or processing circuitry into a particular machine configured to perform an example embodiment of the present invention. Accordingly, the operations of FIGS. 3, 4, 6-8, 10, 11, and 13 define an algorithm for configuring a computer or processor, to perform an example embodiment. In some cases, a general purpose computer may be provided with an instance of the processor which performs the algorithm of FIGS. 3, 4, 6-8, 10, 11, and 13 to transform the general purpose computer into a particular machine configured to perform an example embodiment.

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

FIG. 3 illustrates a flowchart 300 of a method for operating the primary electronic device 102, according to one or more embodiments described herein.

At step 302, the primary electronic device 102 may include means, such as the first processor 202, the first communication network interface 206, the secondary device management unit 210, and/or the like, for connecting to one or more of the secondary electronic devices 106 utilizing at least one first communication protocol. In an example embodiment, the secondary device management unit 210 may be configured to cause the first communication network interface 206 to establish the one or more connections with the secondary electronic devices 106. In some examples, the first communication network interface may determine the at least one first communication protocol from a group of communication protocols including, such as, but are not limited to, Bluetooth, Wi-Fi, ZigBee to establish the one or more connections with the secondary electronic devices 106.

For example, in an implementation, when the first communication network interface 206 utilizes the Bluetooth protocol to establish the one or more connections with the secondary electronic devices 106, the secondary device management unit 210 may cause the first communication network interface 206 to broadcast an "INQUIRY" command within a predefined proximal range around the primary electronic device 102. In an example embodiment, the predefined proximal range may correspond to a maximum distance at which the antenna in the primary electronic device 102 can transmit a signal (comprising data/command/information). For example, if the maximum distance at which the antenna in the primary electronic device 102 can transmit the signal is 5 meters, the predefined proximal range may correspond to an area within 5 meters of the primary electronic device 102.

After broadcasting the "INQUIRY" command, the secondary device management unit 210 may receive a response from the secondary electronic devices 106 that are located within the predefined proximal range of the primary electronic device 102. In an example embodiment, the response may include an alias associated with the each of the secondary electronic devices 106, and/or a unique identification associated with each of the secondary electronic devices 106. In some examples, the unique identification associated with each of the secondary electronic devices 106 corresponds to a hardware address that uniquely identifies a secondary electronic device of the secondary electronic devices 106 in a communication network (e.g., the first communication network 104). An example of the unique identification includes, but not limited to, the MAC address. On receiving the response, the secondary device management unit 210 may be configured to store the alias and the unique identification associated with each of the secondary electronic devices 106 in the first memory device 204 as the information pertaining to the secondary electronic devices 106.

Additionally, or alternatively, in some examples, the secondary device management unit 210 may be configured to assign a unique software address (e.g., IP address) to each of the secondary electronic devices 106 to establish the one or more connections with the secondary electronic devices 106. In some examples, the secondary device management unit 210 may utilize one or more network management protocols such as, but not limited to, the Dynamic Host Configuration Protocol (DHCP) to assign the unique software address to each of the secondary electronic devices 106. In an example embodiment, the secondary device management unit 210 may be configured to store the unique software address assigned to each of the secondary electronic devices 106 in the first memory device 204 as the information pertaining to the secondary electronic devices 106. In some examples, after the secondary device management unit 210 has assigned the unique software address to each of the secondary electronic devices 106, the secondary device management unit 210 determines that the one or more connections have been established with the secondary electronic devices 106.

In some examples, the scope of the disclosure is not limited to assigning the unique software address to each of the secondary electronic devices 106. In an alternative embodiment, the secondary device management unit 210 may utilize the hardware address (received in response to the "INQUIRY" command) to establish the one or more connections with the secondary electronic devices 106.

In some examples, after establishing the one or more connections with the secondary electronic devices 106, the secondary device management unit 210 may be configured to periodically check connection status with each of the secondary electronic devices 106. In an example embodiment, the connection status may be deterministic of whether a secondary electronic device of the secondary electronic devices 106 is connected to the primary electronic device 102. In an example embodiment, the secondary device management unit 210 may be configured to utilize one or more of SNMP protocol and/or ICMP protocol to determine whether the secondary electronic device is connected to the primary electronic device. For example, the secondary device management unit 210 may be configured to periodically ping each of the secondary electronic devices 106 to determine the respective connection status. If the secondary device management unit 210 does not receive any response to the ping from the secondary electronic device, the secondary device management unit 210 may determine that connection between the primary electronic device 102 and the secondary electronic device has dropped. On the other hand, if the secondary device management unit 210 receives the response to the ping from the secondary electronic device, the secondary device management unit 210 may determine that connection is active between the primary electronic device 102 and the secondary electronic device. In some examples, the secondary device management unit 210 may be configured to store the connection status associated with each of the secondary electronic device 106 as the information pertaining to the secondary electronic devices 106 in the first memory device 204.

In some examples, because the "INQUIRY" command is broadcasted within the predefined proximal range of the primary electronic device 102, an unwanted device may connect to the primary electronic device 102 in addition to the secondary electronic devices 106. To allow only the secondary electronic devices 106 to connect to the primary electronic device 102, a worker using the primary electronic device 102 may be configured to provide an input on each of the secondary electronic devices 106 that he wishes to connect to the primary electronic device 102. In some examples, the input may correspond to configuring each of the secondary electronic devices 106 in a pairing mode. In an example embodiment, in the pairing mode, only the secondary electronic devices 106 may listen for the "INQUIRY" command and may accordingly respond the "INQUIRY" command. Other devices, which are within the proximal range of the primary electronic device 102 and not configured in the pairing mode, cannot respond to "INQUIRY" command despite of their location within the predefined proximal range of primary electronic device 102.

In some examples, the scope of the disclosure is not limited to establishing the one or more connections between the primary electronic device 102 and the secondary electronic device 106 based on the methodology described above. In alternative embodiment, the primary electronic device 102 and the secondary electronic devices 106 may establish the one or more connections based on the reading of RFID tags and/or NFC tags located on the secondary electronic devices 106. In some examples, the RFID tags and/or the NFC tags located on a secondary electronic device (e.g., 106a) of the one or more secondary electronic devices 106 may include the respective information pertaining to the secondary electronic device. As discussed, the information pertaining to the secondary electronic device includes the alias associated with the secondary electronic device and the unique identification associated with the secondary electronic device 106. When the worker brings the primary electronic device 102 near to one of the RFID tags and/or the NFC tags on the secondary electronic device 106a, the RFID reader and/or the NFC reader may be configured to receive the information pertaining to the secondary electronic device 106a from the respective RFID tag and/or the respective NFC tag. Thereafter, based on the information pertaining to the secondary electronic device 106a, the primary electronic device 102 may be configured to establish the connection with the secondary electronic device 106a.

In some examples, the scope of the disclosure is not limited to the secondary device management unit 210 establishing the one or more connections with the secondary electronic devices 106 based on the Bluetooth Protocol. In an alternative embodiment, the secondary device management unit 210 may be configured to utilize other communication protocols such as Wi-Fi protocol, ZigBee, Z-Wave, to establish the one or more connections with the secondary electronic devices 106.

At step 304, the primary electronic device 102 may include means, such as the first processor 202, the first event detection unit 212, and/or the like, for detecting the event on the primary electronic device 102. As discussed above, the event may correspond to at least one of the predefined motion of the primary electronic device 102, the predefined orientation of the primary electronic device 102, reception of the predefined speech input from the worker using the primary electronic device 102, or the reception of the predefined audio signal. In an example embodiment, the first event detection unit 212 may be configured to detect the event on the primary electronic device 102 based on the one or more measurements of the one or more parameters associated with the primary electronic device 102. The detection of the event is described later in conjunction with FIGS. 4, 6, 7, 8, 10, and 11.

At step 306, the primary electronic device 102 may include means, such as the first processor 202, the first communication network interface 206, the secondary device management unit 210, for transmitting the first command to each of the secondary electronic devices 106. In an example embodiment, the secondary device management unit 210 may be configured to transmit the first command to the secondary electronic devices 106, in an instance in which the first event detection unit 212 detects the event on the primary electronic device 102. In some examples, prior to transmitting the first command to the secondary electronic devices 106, the secondary device management unit 210 may be configured to extract the information pertaining to the secondary electronic devices 106 connected to the primary electronic device 102 from the first memory device 204. As discussed above, the secondary device management unit 210 may be configured to store the information pertaining to each of the secondary electronic devices 106 connected to the primary electronic device 102. Further, as discussed above, the information stored in the first memory device 204 includes the alias name associated with each of the secondary electronic devices 106, the unique identification associated with the secondary electronic devices 106, the unique software address assigned to each of the secondary electronic devices 106, and/or the connection status associated with each of the secondary electronic devices 106. In an example embodiment, the secondary device management unit 210 may utilize the unique identification and/or the unique software address associated with each of the secondary electronic devices 106 to cause the first communication network interface 206 to transmit the first command. Because the secondary device management unit 210 utilizes the information pertaining to the secondary electronic devices 106 stored in the first memory device 204 to transmit the first command, the secondary device management unit 210 may only transmit the first command to those secondary electronic devices 106 that are connected to the primary electronic device 102 via the at least one first communication protocol.

In an example embodiment, transmitting the first command to the secondary electronic devices 106 may cause the secondary electronic devices 106 that are connected to the primary electronic device 102 to generate a notification. In an example embodiment, the notification may correspond to the audio/visual indicator that is perceivable by the worker using the primary electronic device 102. In some examples, the audio/visual indicator allows the worker to easily identify the secondary electronic devices 106 that are connected to the primary electronic device 102. As such, the present disclosure provides the technical advantages that allow a worker to easily identify secondary electronic devices that are connected to the primary electronic devices.

For example, a secondary electronic device such as a scanner may generate a flashing light signal via its aimer for a given time period. A secondary electronic device such as a printer may generate a flashing light signal via its LED light, generate a beeping sound, and/or cause the paper to move in its feeder for a given time period. A secondary device such as a headset may generate a sound via its speaker or generate a flashing light signal via its LED light for a given time period. In some embodiments, the connected secondary electronic devices simultaneously enter into a "paired devices mode" for a given time period and generate notifications accordingly.

Further, the present disclosure also allows a worker to identify any secondary electronic device of the secondary electronic devices 106 that has lost connection with the primary electronic device 102. The secondary electronic device that is not or is no longer connected to the primary electronic device 102 does not generate the notification because the secondary electronic device does not receive the first command if the connection between the secondary electronic device and the primary electronic device 102 has dropped. Therefore, the worker, using the primary electronic device 102, may be able to identify the secondary electronic device of the secondary electronic devices 106 based on the non-generation of the notification.

FIG. 4 illustrates a flowchart 400 of a method for detecting the event on the primary electronic device 102, according to one or more embodiments described herein.

At step 402, the primary electronic device 102 may include means, such as the first processor 202, the one or more sensors 208, the first event detection unit 212 and/or the like, for causing the one or more sensors 208 to determine the one or more measurements of the one or more parameters associated with the primary electronic device 102. For example, the first event detection unit 212 may cause the one or more sensors 208 to determine the one or more measurements of the orientation parameters associated with the primary electronic device 102. As discussed, the orientation parameters associated with the primary electronic device 102 include, but not limited to, the pitch of the primary electronic device 102, the yaw of the primary electronic device 102, and the roll of the primary electronic device 102. In some examples, the first event detection unit 212 may be configured to cause a gyroscope sensor (one of the one or more sensors 208) to determine the one or more measurements of the orientation parameters of the primary electronic device 102. For example, the gyroscope sensor may determine the orientation parameters as 10 degrees pitch, 60 degrees yaw, and 100 degrees roll.

At step 404, the primary electronic device 102 may include means, such as the first processor 202, the first event detection unit 212, and/or the like, for determining whether the one or more measurements of the orientation parameters is representative of the predefined orientation of the primary electronic device 102. In an example embodiment, the predefined orientation of the primary electronic device 102 may be identified based on whether the one or more measurements of the orientation parameters of the primary electronic device 102 are equal to the predefined values (e.g., predefined values of pitch, yaw, and roll) associated with the predefined orientation. If so, the first event detection unit 212 may determine that the orientation of the primary electronic device 102 is same as the predefined orientation. Hereinafter, the predefined values of the orientation are referred to as orientation threshold. Further, the orientation threshold includes a pitch threshold, a yaw threshold, and/or a roll threshold.

In an example embodiment, to determine whether the one or more measurements of the orientation of the primary electronic device 102 is representative of the predefined orientation, the first event detection unit 212 may determine whether the one or more measurements of the orientation parameters satisfy the orientation threshold. For example, if the first event detection unit 212 determines that the measurement of the pitch of the primary electronic device 102 is equal to the pitch threshold (i.e., one of the orientation threshold), the first event detection unit 212 may determine that the one or more measurements of the orientation parameters satisfy the orientation threshold, and are accordingly representative of the predefined orientation of the primary electronic device 102. In another example, if the first event detection unit 212 determines that the measurement of the yaw of the primary electronic device 102 is equal to the yaw threshold (i.e., one of the orientation threshold), the first event detection unit 212 may determine that the one or more measurements of the orientation parameters satisfies the orientation threshold, and are accordingly representative of the predefined orientation of the primary electronic device 102. In yet another example, if the first event detection unit 212 determines that the measurement of the roll of the primary electronic device 102 is equal to the roll threshold (i.e., one of the orientation threshold), the first event detection unit 212 may determine that the one or more measurements of the orientation parameters satisfy the orientation threshold, and are accordingly representative of the predefined orientation of the primary electronic device 102. In yet another example, if the first event detection unit 212 determines that the measurements of the pitch, the yaw, and the roll of the primary electronic device 102 are equal to the pitch threshold, the yaw threshold, and the roll threshold, respectively, the first event detection unit 212 may determine that the one or more measurements of the orientation parameters satisfy the orientation threshold, and are accordingly representative of the predefined orientation of the primary electronic device 102.

In an example embodiment, if the first event detection unit 212 determines that the one or more measurements of the orientation parameters are representative of the predefined orientation of the primary electronic device 102, the first event detection unit 212 may be configured to perform the step 406. However, if the first event detection unit 212 determines that the one or more measurements of the orientation parameters are not representative of the predefined orientation of the primary electronic device 102, the first event detection unit 212 may be configured to repeat the step 402.

At step 406, the primary electronic device 102 may include means, such as the first processor 202, the first event detection unit 212, and/or the like, for determining whether a predefined time period has elapsed. In an example embodiment, the predefined time period may correspond to a minimum time duration for which if the one or more measurements of the orientation parameters satisfy the orientation threshold, the first event detection unit 212 may detect the event on the primary electronic device 102. In some examples, the predefined time period ensures that the first event detection unit 212 avoids false detection of the event on the primary electronic device 102.

If the first event detection unit 212 determines that the predefined time period has elapsed, the first event detection unit 212 may be configured to perform the step 408. However, if the first event detection unit 212 determines the predefined time period has not elapsed, the first event detection unit 212 may be configured to repeat the step 402.

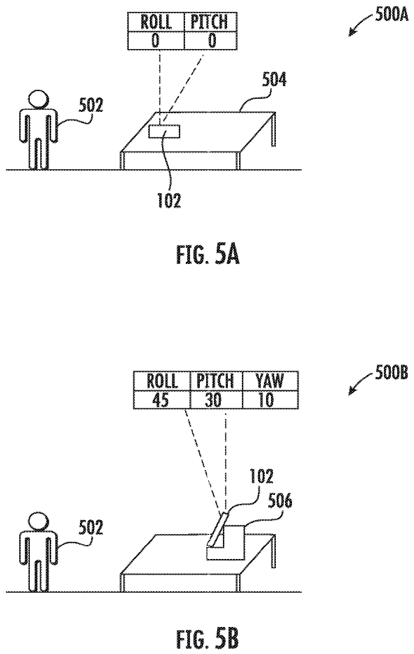

At step 408, the primary electronic device 102 may include means, such as the first processor 202, the first event detection unit 212, and/or the like, for detecting the event. In some examples, the method described in the flowchart 400 allows the worker to trigger the first event detection unit 212 to detect the event by orienting the primary electronic device 102 in the predefined orientation. Various example scenarios with respect to detection of the event based on the one or more measurements of the orientation parameters of the primary electronic device 102 has been described in conjunction with FIG. 5A and FIG. 5B.

FIG. 5A and FIG. 5B illustrate example methods 500A and 500B of detecting the event based on the one or more measurements of the orientation parameters of the primary electronic device 102, according to one or more embodiments described herein.

The example method 500A illustrates that an example predefined orientation. In this example, the worker 502 (using the primary electronic device 102) has to orient the primary electronic device 102 is such that the primary electronic device 102 has 0 degrees roll, and 0 degrees pitch. In such an example implementation, the 0 degrees roll and the 0 degrees pitch correspond to the roll threshold and the pitch threshold (i.e., the orientation threshold). Further, in such implementation, to orient the primary electronic device 102 to have the aforementioned orientation (i.e., 0 degrees roll and the 0 degrees pitch), the worker 502 using the primary electronic device 102 has to place the primary electronic device 102 on a flat surface (e.g., a table 504).

On placing the primary electronic device 102 on the table 504, the first event detection unit 212 may determine that the one or more measurements of the orientation parameters of the primary electronic device 102 as 0 degrees pitch and 0 degrees roll, which is equal to the orientation threshold. Accordingly, the first event detection unit 212 determines whether the one or more measurements of the orientation parameters of the primary electronic device 102 is unchanged for the predefined time period (i.e., step 406). If the first event detection unit 212 determines that the one or more measurements the orientation parameters of the primary electronic device 102 is unchanged for the predefined time period, the first event detection unit 212 may detect the event on the primary electronic device 102. Therefore, the worker 502 may cause the first event detection unit 212 to detect the event on the primary electronic device 102 by merely placing the primary electronic device 102 on the table 504.

The example method 500B illustrates that the predefined orientation may correspond to an orientation of the primary electronic device 102 when the primary electronic device 102 is placed on a hub or a stand (e.g., the stand 506). In such an implementation, the orientation threshold may include such values of the yaw threshold, the pitch threshold, and the roll threshold so that when the primary electronic device 102 is placed on the stand 506, the one or more measurements of the orientation parameters associated with the primary electronic device 102 will be equal to the orientation thresholds. For example, the orientation thresholds include 10 degrees yaw threshold, 30 degrees pitch threshold, and 45 degrees roll threshold. When the primary electronic device 102 is placed on the stand 506, the first event detection unit 212 may determine the one or more measurements of the orientation parameters as 10 degrees yaw, 30 degrees pitch, and 45 degrees roll. Accordingly, the first event detection unit 212 determines that the one or more measurements of the orientation parameters of the primary electronic device 102 is equivalent to the orientation threshold. Thereafter, the first event detection unit 212 may determine whether the one or more measurements of the orientation parameters of the primary electronic device 102 is equivalent to the orientation threshold for the predefined time period. If the one or more measurements of the orientation parameters are equivalent to the orientation threshold for the predefined time period, the first event detection unit 212 may detect the event on the primary electronic device 102. If the one or more measurements of the orientation parameters are not equivalent to the orientation threshold for the predefined time period, the first event detection unit 212 may determine that the event did not occur on the primary electronic device 102.

In some embodiments, at least one of the orientation thresholds (including the pitch threshold, the yaw threshold, and/or the roll threshold) indicates a range of values. For example, the pitch threshold may indicate a range of 0-30 degrees; the yaw threshold may indicate a range of 0-10 degrees; the roll threshold may indicate a range of 0-45 degrees. When the one or more measurements of the orientation parameters (e.g. yaw, pitch, roll) fall within the range of values indicated by its corresponding threshold, the first event detection unit 212 may detect the event on the primary electronic device 102.

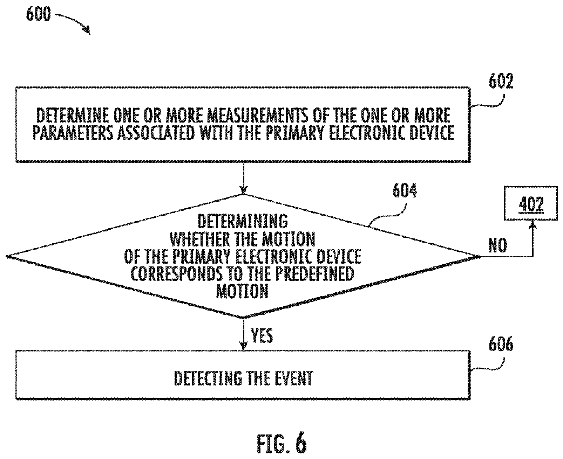

FIG. 6 illustrates a flowchart 600 of a method for detecting an event, according to one or more embodiments described herein.

At step 602, the primary electronic device 102 may include means, such as the first processor 202, the one or more sensors 208, and/or the like, for determining the one or more measurements of the one or more parameters associated with the primary electronic device 102. For example, the first processor 202 may cause the one or more sensors 208 to determine the one or more measurements of the motion parameters. As discussed above, the motion parameters correspond to one of the one or more parameters associated with the primary electronic device 102. Further, as discussed above, the motion parameters include at least one of the acceleration of the primary electronic device 102, the deceleration of the primary electronic device 102, the speed of the primary electronic device 102, the rate of change of acceleration of the primary electronic device 102, and/or the rate of change of deceleration of the primary electronic device 102.

In an example embodiment, the first processor 202 may cause the accelerometer in the primary electronic device 102 to determine the one or more measurements of the motion parameters (e.g., the acceleration and/or the deceleration of the primary electronic device 102), while the worker of the primary electronic device 102 moves the primary electronic device 102. In an example embodiment, the accelerometer (i.e., one of the one or more first sensors) may determine the one or more measurements of the motion parameters in accordance with a sampling rate associated with the one or more sensors 208. In some examples, the sampling rate associated with the one or more sensors 208 corresponds to a frequency at which the one or more sensors 208 may determine the one or more measurements of the one or more parameters. For example, if the sampling rate of a sensor of the one or more sensors 208 is 10 samples/second, the sensor may determine the measurements of the one or more parameters 10 times in a second.

At step 604, the primary electronic device 102 may include means, such as the first processor 202, the first event detection unit 212, and/or the like, for determining whether the motion of the primary electronic device 102 corresponds to one of the predefined motions. In an example embodiment, the predefined motions of the primary electronic device 102 may correspond to certain gestures that the worker may perform on or with the primary electronic device 102.

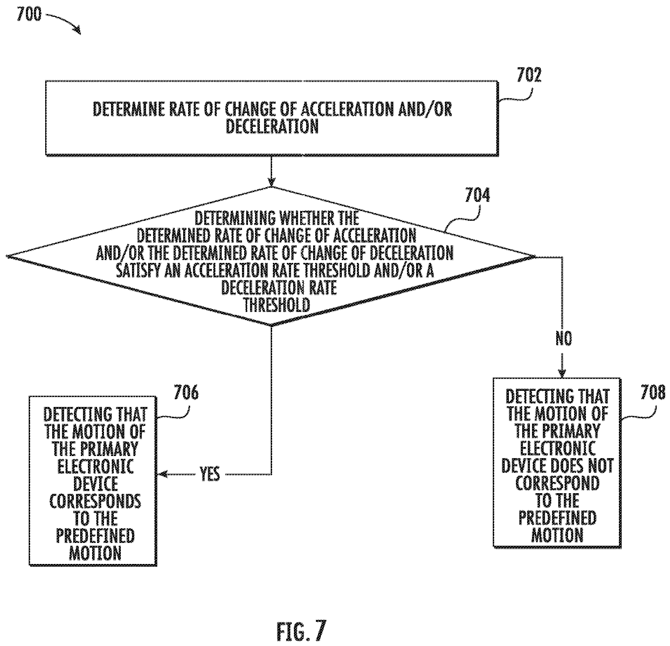

For example, a worker may hold the primary electronic device 102 in one of the hands and shake the hand (in which the primary electronic device 102 is being held). In such a scenario, the shaking of the hand, while holding the primary electronic device 102, may correspond to the predefined motion of the primary electronic device 102. In another example, the worker may have moved the primary electronic device 102 in a circle. Such movement may also correspond to the predefined motion of the primary electronic device. In an example embodiment, the detection of the predefined motion of the primary electronic device 102 is described in conjunction with FIGS. 7, 8, 10, and 11.

Referring back to FIG. 6, at step 604, if the first event detection unit 212 determines that the motion of the primary electronic device 102 corresponds to the predefined motion, the first event detection unit 212 may be configured to perform the step 606. However, of the first event detection unit 212 determines that the motion of the primary electronic device 102 does not correspond to any of the predefined motion(s), the first event detection unit 212 may be configured to continue the step 402 of FIG. 4.

At step 606, the primary electronic device 102 may include means, such as the first processor 202, the first event detection unit 212, and/or the like, for detecting the event. Therefore, in some examples, the predefined motion of the primary electronic device 102 may cause the first event detection unit 212 to detect the event. As discussed, on detection of the event, the secondary device management unit 210 may cause the first communication network interface 206 to transmit the first command to the secondary electronic devices 106.

FIG. 7 illustrates a flowchart 700 of a method for detecting the predefined motion of the primary electronic device 102, according to one or more embodiments described herein.

At step 702, the primary electronic device 102 may include means, such as the first processor 202, the first event detection unit 212, and/or the like, for determining the rate of change of acceleration and/or the rate of change of deceleration over a predetermined time period. In some examples, the predetermined time period may correspond to a time duration for which the worker of the primary electronic device 102 has moved the primary electronic device 102. In an example embodiment, the first event detection unit 212 may determine the rate of change of acceleration and/or a rate of change of deceleration using the following equation:

$$j(t) = \frac{d(a)}{dt} \qquad\qquad (1)$$

Where,

$j(t)$: the rate of change of acceleration and/or the rate of change of deceleration; and
a: the measurement of the acceleration and/or the measurement of deceleration; and
t: sampling time associated with the one or more sensors.

At step 704, the primary electronic device 102 may include means, such as the first processor 202, the first event detection unit 212, and/or the like, for determining whether the determined rate of change of acceleration and/or the determined rate of change of deceleration satisfy an acceleration rate threshold and/or a deceleration rate threshold, respectively. In an example embodiment, the acceleration rate threshold and/or the deceleration rate threshold corresponds to the value of the rate of change of acceleration and/or the rate of change of deceleration beyond which the first event detection unit 212 may detect a sudden acceleration and/or a sudden deceleration of the primary electronic device 102. For example, if the first event detection unit 212 determines that the rate of change of acceleration of the primary electronic device 102 is greater than or equal to the acceleration rate threshold, the first event detection unit 212 may determine that the one or more measurements of the motion parameters depict the sudden acceleration of the primary electronic device 102. Similarly, if the first event detection unit 212 determines that the rate of change of deceleration of the primary electronic device 102 is less than or equal to the deceleration rate threshold, the first event detection unit 212 may determine that the one or more measurements of the motion parameters depict the sudden deceleration of the primary electronic device 102. In an example embodiment, the sudden acceleration and/or sudden deceleration would depict that the primary electronic device 102 was brought in motion based on the sudden acceleration of the primary electronic device 102, and was brought to halt based on the sudden deceleration of the primary electronic device 102. Such motion, in some examples, would depict the shake motion of the primary electronic device 102.

If the first event detection unit 212 determines that the determined rate of change of acceleration and/or the determined rate of change of deceleration satisfy the acceleration rate threshold and/or the deceleration rate threshold, respectively, the first event detection unit 212 may be configured to perform the step 706. However, if the first event detection unit 212 determines that the one or more measurements of the motion parameters do not satisfy the acceleration rate threshold and/or the deceleration rate threshold, the first processor 202 may be configured to perform the step 708.

At step 706, the primary electronic device 102 may include means, such as the first processor 202, the first event detection unit 212, and/or the like, for detecting that the motion of the primary electronic device 102 corresponds to the predefined motion.

At step 708, the primary electronic device 102 may include means, such as the first processor 202, the first event detection unit 212, and/or the like, for detecting that the motion of the primary electronic device 102 does not correspond to the predefined motion.

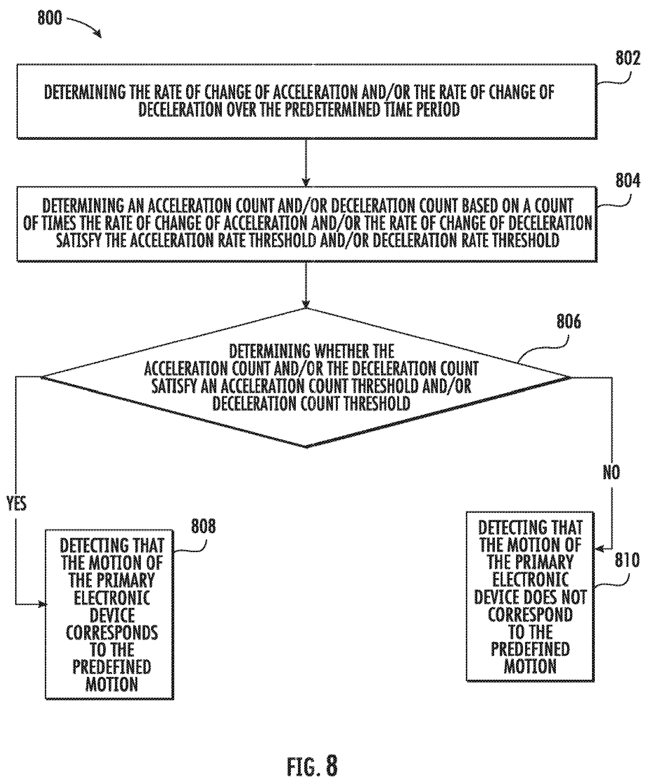

In some examples, the scope of the disclosure is not limited to the predefined motion as a single shake motion. In an alternative embodiment, the first event detection unit 212 may detect the predefined motion when the primary electronic device 102 has been shaken for a predefined count of times (for example, 3 times). In such an implementation, the one or more measurements would depict a predefined count of sudden acceleration and sudden deceleration. One such method of detecting the predefined motion is described in conjunction with FIG. 8.

FIG. 8 illustrates a flowchart 800 of another method for detecting the predefined motion of the primary electronic device 102, according to one or more embodiments described herein.

At step 802, the primary electronic device 102 includes means, such as the first processor 202, the first event detection unit 212, and/or the like, for determining the rate of change of acceleration and/or the rate of change of deceleration over the predetermined time period. In an example embodiment, the first event detection unit 212 may be configured to determine the rate of change of acceleration and/or the rate of change of deceleration using the methodologies described in the step 702.

At step 804, the primary electronic device 102 includes means, such as the first processor 202, the first event detection unit 212, and/or the like, for determining an acceleration count and/or deceleration count based on a count of times the rate of change of acceleration and/or the rate of change of deceleration satisfy the acceleration rate threshold and/or deceleration rate threshold (i.e., the count of times the first event detection unit 212 observes sudden change in acceleration/deceleration), respectively, during the predetermined time period. For example, the first event detection unit 212 may be configured to determine the count of times the rate of change of acceleration is greater than or equal to the acceleration rate threshold, during the predetermined time period (as described in the step 704). Thereafter, the first event detection unit 212 may determine the count of times as the acceleration count. Similarly, the first event detection unit 212 may be configured to determine the count of times the rate of change of deceleration of the primary electronic device 102 is less than or equal to the deceleration rate threshold (as described in the step 704), during the predetermined time period.

At step 806, the primary electronic device 102 includes means, such as the first processor 202, the first event detection unit 212, and/or the like, for determining whether the acceleration count and/or the deceleration count satisfy an acceleration count threshold and/or deceleration count threshold, respectively. In an example embodiment, the acceleration count threshold and the deceleration count threshold correspond to the values of the acceleration count and the deceleration count beyond which the first event detection unit 212 may determine that the acceleration count and/or the deceleration count satisfy the acceleration count threshold and/or deceleration count threshold, respectively.

In some examples, if the first event detection unit 212 determines that the acceleration count is greater than or equal to the acceleration count threshold, the first event detection unit 212 may determine the acceleration count satisfies the acceleration count threshold. Accordingly, the first event detection unit 212 may perform the step 808. In an alternative embodiment, if the first event detection unit 212 determines that the deceleration count is greater than or equal to the deceleration count threshold, the first event detection unit 212 may determine that the deceleration count satisfies the deceleration count threshold. Accordingly, the first event detection unit 212 may perform the step 808.

In yet another alternative embodiment, the first event detection unit 212 may perform the step 808 only when both the acceleration count and the deceleration count is greater than or equal to the acceleration count threshold and the deceleration count threshold, respectively. In an example embodiment, when the event detection unit 212 determines that the acceleration count and the deceleration count is greater than the acceleration count threshold and the deceleration count threshold, respectively, the event detection unit 212 may determine that the primary electronic device 102 has been shaken for the predefined count of times.

At step 808, the primary electronic device 102 includes means, such as the first processor 202, the first event detection unit 212, and/or the like, for detecting that the motion of the primary electronic device 102 corresponds to the predefined motion.

On the other hand, at step 806, if the first event detection unit 212 determines that the acceleration count and/or the deceleration count does not satisfy the acceleration count threshold and/or the deceleration count threshold, the first event detection unit 212 may be configured to perform the step 810. At step 810, the primary electronic device 102 includes means, such as the first processor 202, the first event detection unit 212, and/or the like, for detecting that the motion of the primary electronic device 102 does not correspond to the predefined motion.

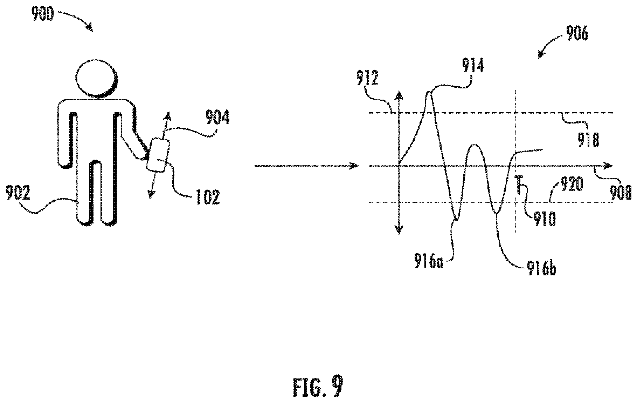

FIG. 9 illustrates an example method 900 of detecting the predefined motion of the primary electronic device 102, according to one or more embodiments described herein.

The example method 900 depicts a worker 902 shaking the primary electronic device 102 in directions 904. Such motion of the primary electronic device 102 is detected by the one or more sensors 208 (e.g., accelerometer) in the primary electronic device 102. A graph 906 depicts the measurement of the rate of change of acceleration and the rate of change of deceleration determined by first event detection unit 212 (as described, for example, with reference to step 802 of FIG. 8) based on the one or more measurements of the acceleration and the deceleration (determined by the one or more sensors 208). The graph 906 includes an X-axis 908 depicting the predetermined time period for which the primary electronic device 102 was in motion. For example, the primary electronic device 102 was in motion for the predetermined time period T (depicted by 910). Further, the graph 906 includes a Y-axis 912 depicting the rate of change of the acceleration. In some examples, the negative Y-Axis 912 depicts the rate of change of deceleration.

The graph 906 depicts one instance of sudden acceleration (depicted by the peak 914) and two instances of sudden deceleration (depicted by peaks 916a and 916b) during the predetermined time period T (depicted by 910). As discussed above, the first event detection unit 212 may be configured to detect the sudden acceleration and the sudden deceleration of the primary electronic device 102 based on the acceleration rate threshold and the deceleration rate threshold. The value $A_T$ (depicted by 918) and $D_T$ (depicted by 920), in the graph 906, correspond to the acceleration rate threshold and the deceleration rate threshold, respectively. To this end, the rate of change of acceleration of the primary electronic device 102 exceeds the amplitude rate threshold 918 once during the predetermined time period 910. Further, the rate of change of deceleration goes below the deceleration rate threshold 920 twice during the predetermined time period 910. Therefore, the first event detection unit 212 may determine the acceleration count as one and the deceleration count as two.

If the acceleration count threshold and the deceleration count threshold are two, the first event detection unit 212 may determine that the acceleration count does not satisfy the acceleration count threshold, while the deceleration count satisfies the deceleration count threshold. Therefore, in one embodiment, the first event detection unit 212 may detect that the motion of the primary electronic device 102 does not correspond to the predefined motion. In another embodiment, the first event detection unit 212 may detect that the motion of the primary electronic device 102 corresponds to the predefined motion if either the acceleration count or deceleration count satisfies its corresponding threshold.

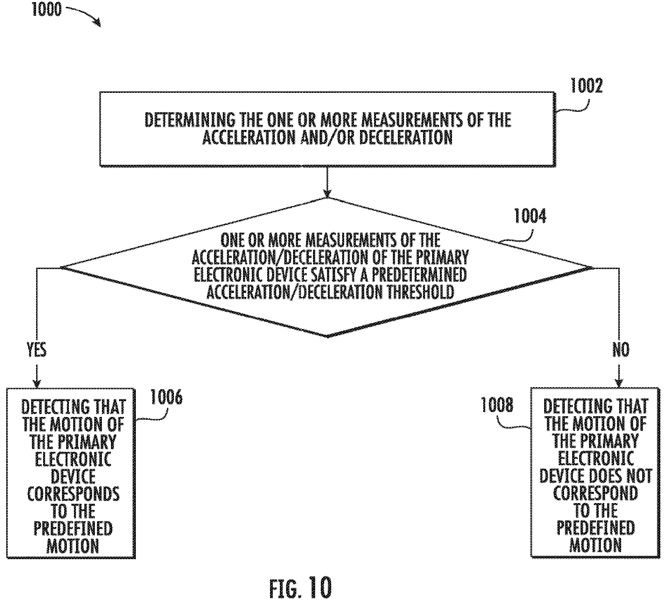

In some examples, the scope of the disclosure is not limited to detecting the predefined motion of the primary electronic device 102 based on the rate of change of acceleration and/or deceleration satisfying the acceleration rate threshold and/or the deceleration rate threshold, respectively. In an alternative embodiment, the first event detection unit 212 may be configured to detect the predefined motion of the primary electronic device 102 based on the measurement of the acceleration and/or the measurement of the deceleration. One such method of detecting the predefined motion of the primary electronic device 102 is described in conjunction with FIG. 10.

FIG. 10 illustrates a flowchart 1000 of another method for detecting the predefined motion of the primary electronic device 102, according to one or more embodiments described herein.

At step 1002, the primary electronic device 102 includes means, such as the first processor 202, the one or more sensors 208, the first event detection unit 212, and/or the like, for determining the one or more measurements of the acceleration and/or deceleration, as is described above in the step 602. At step 1004, the primary electronic device 102 includes means, such as the first processor 202, the first event detection unit 212, and/or the like, for determining whether the one or more measurements of the acceleration/deceleration of the primary electronic device 102 satisfy a predetermined acceleration/deceleration threshold. In an example embodiment, the acceleration/deceleration threshold may correspond to the values of the acceleration/deceleration boundaries, beyond which the first event detection unit 212 may determine that the one or more measurements of the acceleration/deceleration satisfy the acceleration/deceleration threshold, respectively. For example, if the measurement of the acceleration of the primary electronic device 102 is greater than or equal to the acceleration threshold, the first event detection unit 212 may determine that the measurement of the acceleration satisfy the acceleration threshold. In another example, if measurement of the deceleration of the primary electronic device 102 is less than or equal to the deceleration threshold, the first event detection unit 212 may determine that the measurement of the deceleration satisfies the deceleration threshold.

If the first event detection unit 212 determines that the measurements of the acceleration and/or deceleration satisfy the acceleration threshold and/or deceleration threshold, the first event detection unit 212 may perform the step 1006. However, if the first event detection unit 212 determines that the measurements of the acceleration and/or deceleration does not satisfy the acceleration threshold and/or deceleration threshold, the first event detection unit 212 may be configured to perform the step 1008.

At step 1006, the primary electronic device 102 includes means, such as the first processor 202, the one or more sensors 208, the first event detection unit 212, and/or the like, for detecting that the motion of the primary electronic device 102 corresponds to the predefined motion.

At step 1008, the primary electronic device 102 includes means, such as the first processor 202, the one or more sensors 208, the first event detection unit 212, and/or the like, for detecting that the motion of the primary electronic device 102 does not correspond to the predefined motion.

In some examples, the predefined motion of the primary electronic device 102 is not limited to the predefined motion as the motion described in the flowcharts 700, 800, and 1000. In an example embodiment, the predefined motion may correspond to a predefined travel path or movement pattern of the primary electronic device 102. The predefined travel path or movement pattern may be created based on user input. For example, the worker may move the hand in which the primary electronic device 102 is being held to create the predefined travel path or the movement pattern, and the primary electronic device 102 may record various parameters associated with the predefined travel path or the movement pattern. For example, the predefined travel path may be a circle.

Further, the first event detection unit 212 may be configured to detect such predefined motion of the primary electronic device 102 using an example method described herein.

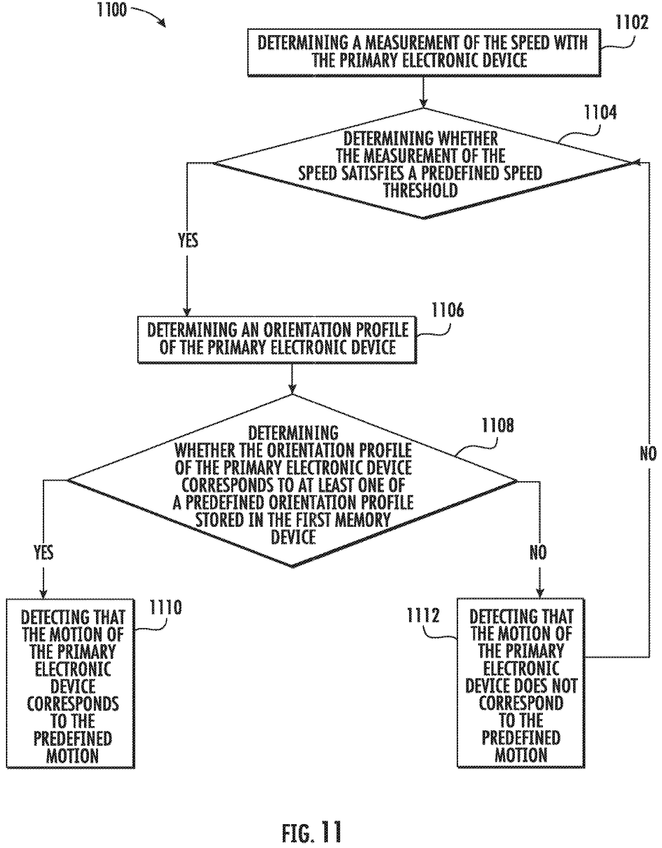

FIG. 11 illustrates a flowchart 1100 of yet another method for detecting the predefined motion of the primary electronic device 102, according to one or more embodiments described herein.

At step 1102, the primary electronic device 102 includes means, such as the first processor 202, the one or more sensors 208, the first event detection unit 212, and/or the like, for determining a measurement of the speed at which the primary electronic device 102 is being moved by the worker. In an example embodiment, the first event detection unit 212 may be configured to determine the speed of the primary electronic device 102 based on the one or more measurements of the motion parameters, such as the acceleration and/ deceleration of the primary electronic device 102. In an example embodiment, the first event detection unit 212 may be configured to utilize the following equation to determine the speed of the primary electronic device 102:

$$speed = \int a(t)\,dt \qquad\qquad (2)$$

Where,

$a(t)$: acceleration of the primary electronic device 102.

At step 1104, the primary electronic device 102 includes means, such as the first processor 202, the one or more sensors 208, the first event detection unit 212, and/or the like, for determining whether the measurement of the speed satisfies a predefined speed threshold. In an example embodiment, the predefined speed threshold may correspond to a value of the speed beyond which the first event detection unit 212 may determine the measurement of the speed to satisfy the speed threshold. For example, if the first event detection unit 212 determines that the measurement of the speed of the primary electronic device 102 is greater than or equal to the speed threshold, the first event detection unit 212 may determine that the measurement of the speed of the primary electronic device 102 satisfies the speed threshold. In an example embodiment, if the first event detection unit 212 determines that the measurement of the speed of the primary electronic device 102 satisfies the speed threshold, the first event detection unit 212 may be configured to perform the step 1106. However, if the first event detection unit 212 determines that the measurement of the speed of the primary electronic device 102 does not satisfy the speed threshold, the first event detection unit 212 may be configured to perform the step 1112.

At step 1106, the primary electronic device 102 includes means, such as the first processor 202, the one or more sensors 208, the first event detection unit 212, and/or the like, for determining an orientation profile of the primary electronic device 102. In an example embodiment, the orientation profile of the primary electronic device 102 may correspond to a set of measurements of the orientation parameters that are determined while the primary electronic device 102 is in motion. An example orientation profile of the primary electronic device 102 is illustrated below:

Table 2: illustrates example orientation profile of the primary electronic device 102

| Time Point | Pitch | Yaw | Roll |
|---|---|---|---|
| $T_1$ | 0 degrees | 0 degrees | 0 degrees |
| $T_2$ | 10 degrees | 0 degrees | 5 degrees |
| $T_3$ | 20 degrees | 0 degrees | 3.5 degrees |
| $T_4$ | 5 degrees | 0 degrees | 0 degrees |

In an example embodiment, the orientation profiles are created based on user inputs. As described above, the worker may move the hand in which the primary electronic device 102 is being held to create the predefined travel path or the movement pattern. During the movement, the primary electronic device 102 may record the pitch, yaw, and roll at various time points associated with the predefined travel path or the movement pattern.

At step 1108, the primary electronic device 102 includes means, such as the first processor 202, the one or more sensors 208, the first event detection unit 212, and/or the like, for determining whether the orientation profile of the primary electronic device 102 corresponds to at least one of the predefined orientation profiles stored in the first memory device 204. In an example embodiment, the predefined orientation profile corresponds to a set of measurements of the orientation parameters that the primary electronic device 102 may have while the worker moves the primary electronic device 102 based on the predefined travel path (e.g., the circle) or motion pattern. In an example embodiment, the first event detection unit 212 may be configured to compare the orientation profile of the primary electronic device 102 with the predefined orientation profiles to determine whether the orientation profile of the primary electronic device 102 is same as the at least one of predefined orientation profiles. In an example embodiment, if the first event detection unit 212 determines that the orientation profile of the primary electronic device 102 is same as the at least one predefined orientation profile, the first event detection unit 212 may be configured to perform the step 1110. However, if the first event detection unit 212 determines that the orientation profile is not same as any of the predefined orientation profile(s), the first event detection unit 212 may be configured to perform the step 1112.

At step 1110, the primary electronic device 102 includes means, such as the first processor 202, the one or more sensors 208, the first event detection unit 212, and/or the like, for detecting that the motion of the primary electronic device 102 corresponds to the predefined motion.

At step 1112, the primary electronic device 102 includes means, such as the first processor 202, the one or more sensors 208, the first event detection unit 212, and/or the like, for detecting that the motion of the primary electronic device 102 does not correspond to the predefined motion.

Further, each of the acceleration rate threshold, deceleration rate threshold, acceleration count threshold, the deceleration count threshold, the acceleration threshold, the deceleration threshold, the speed threshold, and the predefined orientation profile may be stored on the first memory device 204 during manufacturing of the primary electronic device 102.

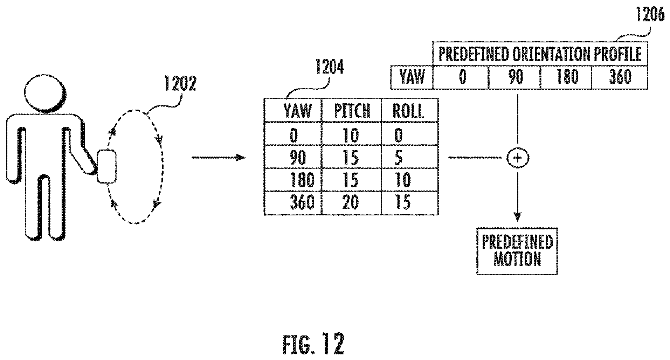

FIG. 12 illustrates an example method to detect the predefined motion of the primary electronic device 102, according to one or more embodiments described herein.

The example method 1200, depicts that the worker causes the primary electronic device 102 to move along a virtual path (e.g., a circle 1202). During such motion of the primary electronic device 102, the first event detection unit 212 may be configured to determine the orientation profile of the primary electronic device 102 (as described in the step 1106). An example orientation profile is depicted by 1204 in the example method 1200. The example orientation profile 1204 depicts that the yaw of the primary electronic device 102 varies from 0-360 degrees.

Thereafter, the first event detection unit 212 may be configured to compare the determined orientation profile with the at least one predefined orientation profile (e.g., the orientation profile of the circle (depicted by 1206)). From the predefined orientation profile 1206, for the circular shape, the measurement of the yaw varies from 0 degrees to 360 degrees. Therefore, based on the comparison of the orientation profile 1204 of the primary electronic device 102 and the predefined orientation profile, the primary electronic device 102 may determine that the orientation profile 1204 of the primary electronic device 102 is same as the at least one predefined orientation profile 1206. Accordingly, the first event detection unit 212 may determine that the motion of the primary electronic device 102 corresponds to the predefined motion.

FIG. 13 illustrates a flowchart 1300 of another method for detecting the event on the primary electronic device 102, according to one or more embodiments described herein.

At step 1302, the primary electronic device 102 may include means, such as the first processor 202, the one or more sensors 208, the first audio processing unit 214, and/or the like, for causing the one or more sensors 208 to determine the one or more measurements of the one or more parameters associated with the primary electronic device 102. For example, the first audio processing unit 214 may cause the one or more sensors 208 to determine the one or more measurements of the audio parameters associated with the primary electronic device 102. In an example embodiment, to determine the audio parameters, the first audio processing unit 214 may be configured to cause the one or more sensors 208 to detect the audio signal. In some examples, as discussed above, the audio signal may correspond to a sound generated in the environment around the primary electronic device 102. For example, the worker may tap on a housing of the primary electronic device 102 to generate a tapping sound. The tapping sound may correspond to the audio signal. In another example, the audio signal may correspond to a speech input of the worker using the primary electronic device 102. As discussed above, the audio parameters may include the amplitude of the audio signal, the frequency of the audio signal, and the power spectrum of the audio signal.

To determine the audio parameters, in an example embodiment, the first audio processing unit 214 may be configured to utilize the second sensor to detect the audio signal and accordingly generate the electrical signal corresponding to the detected audio signal. As discussed above, the second sensor corresponds to a microphone that is capable of generating the electrical signal corresponding to the detected audio signal.

In an example embodiment, the first audio processing unit 214 may cause the second sensor to determine the one or more measurements of the one or more characteristics of the electrical signal as the audio parameters. In an example embodiment, the one or more characteristics of the electrical signal may include, but are not limited to, the amplitude of the electrical signal, the frequency of the electrical signal, and the power spectrum of the electrical signal. In an example embodiment, the second sensor of sensors 208 may be configured to utilize one or more signal processing techniques, such as, but are not limited to, Fast Fourier transform (FFT), Discrete Fourier Transform (DFT), and wavelet transform, to determine the one or more measurements of the one or more characteristics of the electrical signal. In an example embodiment, the one or more measurements of the one or more characteristics of the electrical signal correspond to the one or more measurements of the audio parameters associated with the audio signal (detected by the second sensor).

In some examples, the scope of the disclosure is not limited to the second sensor determining the one or more measurements of the audio parameters. In an example embodiment, the first audio processing unit 214 may be configured to determine the one or more measurements of the audio parameters. In such an implementation, the first audio processing unit 214 may be configured to receive the electrical signal corresponding to the detected audio signal. Thereafter, the first audio processing unit 214 may be configured to determine the one or more measurements of the audio signal.

At step 1304, the primary electronic device 102 may include means, such as the first processor 202, the one or more sensors 208, the first audio processing unit 214, and/or the like, for determining whether the audio signal includes a speech input. In an example embodiment, the speech input may correspond to a human speech. In an example embodiment, the first audio processing unit 214 may be configured to determine whether the audio signal includes the speech input based on the one or more measurements of audio parameters. In some examples, the first audio processing unit 214 may be configured to utilize one or more algorithms such as, but are not limited to, a GSM Voice Activity Detection (VAD) algorithm to determine whether the audio signal include the speech input from the worker. If the first audio processing unit 214 determines that the audio signal does not include or does not correspond to a speech input, the first audio processing unit 214 may be configured to perform the step 1306. However, if the first audio processing unit 214 determines that the audio signal includes or corresponds to the speech input, the first audio processing unit 214 may be configured to perform the step 1310.

At step 1306, the primary electronic device 102 may include means, such as the first processor 202, the one or more sensors 208, the first audio processing unit 214, and/or the like, for determining whether the audio signal is equivalent to at least one of one or more template audio signals. In an example embodiment, the one or more template audio signals may correspond to a collection of sounds. When one of the collection of sounds is detected by the first audio processing unit 214, the first event detection unit 212 may detect the event on the primary electronic device 102. An example of the template audio signal may include double tap sound which is generated when a worker double taps on the housing of the primary electronic device 102. Another of the template audio signal may include a series of sound which is generated when a worker taps on the housing of the primary electronic device 102 according to a certain frequency.

In an example embodiment, the one or more template audio signals are stored in the first memory device 204 during the manufacturing of the primary electronic device 102. More specifically, the measurements of the one or more characteristics of each of the one or more template electrical signals, corresponding to the one or more template audio signals, may be pre-stored in the first memory device 204.

In an example embodiment, the one or more template audio signals are created based on user input. For example, a worker may input command to instruct the primary electronic device 102 to record the audio signal when the worker double taps on the housing of the primary electronic device 102. The primary electronic device 102 then stores the audio signal in the first memory device 204 as one of the one or more template audio signals.

In an example embodiment, to determine whether the audio signal corresponds to the at least one of the one or more template audio signals, the first audio processing unit 214 may be configured to compare the one or more measurements of the one or more characteristics of the electrical signal (corresponding to the audio signal detected by the second sensor) with the one or more measurements of the one or more characteristics of each of the one or more template electrical signals (corresponding to the one or more template audio signals). For example, if the first audio processing unit 214 determines that the measurement of the one or more characteristics of the electrical signal is equal to the measurements of the one or more characteristics of the template electrical signal corresponding to the double tap sound, the first audio processing unit 214 may determine that the audio signal corresponds to the double tap sound. Accordingly, the first processor 202 may be configured to perform the step 1308. However, if the first audio processing unit 214 determines that the audio signal is not equivalent to any of the one or more template audio signals, the first audio processing unit 214 may be configured to repeat the step 1302. In some examples, the first audio processing unit 214 may be configured to utilize other speech processing techniques such as, but are not limited to, acoustic fingerprint or audio fingerprinting and dynamic-time warping, to determine whether the audio signal corresponds to one of the one or more template audio signals.

At step 1308, the primary electronic device 102 may include means, such as the first processor 202, the one or more sensors 208, the first event detection unit 212, and/or the like, for detecting the event on the primary electronic device 102.

As discussed above in conjunction with the 1304, if the first audio processing unit 214 determines that the audio signal includes the speech signal, the first audio processing unit 214 may be configured to perform the step 1310. At step 1310, the primary electronic device 102 may include means, such as the first processor 202, the one or more sensors 208, the first audio processing unit 214, and/or the like, for converting the audio signal to text using one or more speech to text (STT) algorithms. Some examples of the STT algorithms may include, but are not limited to, Hidden Markov Models (HMM), Dynamic Time Wrapping (DTW) based speech recognition, and neural network based speech recognition. In an example embodiment, the text, obtained from the audio signal, may include one or more words that the worker speaks into the second sensor of the primary electronic device 102.

At step 1312, the primary electronic device 102 may include means, such as the first processor 202, the one or more sensors 208, the first audio processing unit 214, and/or the like, for determining whether the text corresponds to a second command. In an example embodiment, the second command may correspond to an instruction that the worker of the primary electronic device 102 may provide to the primary electronic device 102 to perform the predetermined operation. For example, the predetermined operation corresponding to the second command may include transmitting the first command to the one or more secondary electronic devices 106. In an example embodiment, to detect the whether the text corresponds to the second command, the first event detection unit 212 may be configured to compare the text (obtained based on the speech to text conversion) with a string corresponding to the second command. In some examples, the first event detection unit 212 may be configured to use one or more string comparison algorithms to compare the text with the string corresponding to the second command. If, based on the comparison, the first event detection unit 212 determines that the text corresponds to the second command, the first event detection unit 212 may be configured to perform the step 1314. However, if the first event detection unit 212 determines that the text does not correspond to the second command, the first event detection unit 212 may be configured to repeat the step 1302.

At step 1314, the primary electronic device 102 may include means, such as the first processor 202, the one or more sensors 208, and/or the like, for detecting the event on the primary electronic device 102.

In some examples, the scope of the disclosure is not limited to the second sensors in the primary electronic device 102 detecting the audio signal. In an alternative embodiment, the primary electronic device 102 may receive the audio signal from one of the secondary electronic devices 106. For example, the worker may provide the audio signal (e.g., either the double tap input or the speech input) through the secondary electronic device 106a (corresponding to the headset). In such an implementation, the secondary electronic device 106a may include the second sensor that may be configured to detect the audio signal and may be configured to accordingly generate an event detection signal. Further, the secondary electronic device 106a may be configured to transmit the event detection signal to the primary electronic device 102 over the first communication network 104. Thereafter, the primary electronic device 102 may be configured to perform the steps illustrated in the flowchart 1300 to detect the event.

In some examples, the scope of the disclosure is not limited to detecting the events based on the reception of the audio signal and/or speech signal, the predefined motion of the primary electronic device 102, and/or the predefined orientation of the primary electronic device 102. In an alternative embodiment, the event may be detected on the primary electronic device based on reception of an input corresponding to the pressing of the button in a predefined pattern, capturing of a predefined image, and/or reading of a predefined RFID tag.

For example, when the detection of the event corresponds to pressing of the button in a predefined pattern, the event detection unit 212 may be configured to monitor the pressing of the button on the primary electronic device 102. For example, the first event detection unit 212 may be configured to receive an input signal when the button (the one or more third sensor) is pressed. Based on the reception of the input signal, the first event detection unit 212 may be configured to monitor the pressing of the button. For example, based on the monitoring of input signal, the first event detection unit 212 may be configured to determine a count of times the first event detection unit 212 receives the input signal. In another example, based on monitoring of the input signal, the first event detection unit 212 may determine a time duration for which the input signal is received.

Based on the count of times the first event detection unit 212 receives the input signal, the first event detection unit 212 determines that a count of times the button has been pressed as the count of times the input signal is received. Thereafter, the first event detection unit 212 determines whether the count of times that the input signal is received satisfies a predefined count. In some examples, the predefined count may correspond to the count of times the button has to be pressed for the first event detection unit 212 to detect the event on the primary electronic device 102. If the first event detection unit 212 determines that the count of the times the button has been pressed satisfies the predefined count, the first event detection unit 212 detects the event on the primary electronic device. In an example embodiment, the predefined count corresponds to the predefined pattern of pressing the button. Similarly, the first event detection unit 212 may be configured to determine whether the duration for the first event detection unit 212 receives the input signal satisfy a predefined duration. If the first event detection unit 212 determines that the duration for which the first event detection unit 212 receives the input signal satisfies the predefined duration, the first event detection unit 212 detects the event on the primary electronic device 102. In an example embodiment, the predefined duration corresponds to the predetermined pattern of pressing the button.

In an example embodiment, where the event on the primary electronic device 102 corresponds to capturing of predefined image, the worker using the primary electronic device 102 may provide the input to cause the image capturing device to capture the image of the field of the view of the image capturing device. For example, the worker may press the button to cause the image capturing device to capture the image. Thereafter, the first event detection unit 212 may determine whether the captured image corresponds to the predefined image. In some examples, the first event detection unit 212 may be configured to utilize one or more image processing techniques such as Scale Invariant Feature Transform (SIFT) and Speeded Up Robust Features (SURF) to determine whether the captured image corresponds to the predefined image. If the first event detection unit 212 determines that the captured image corresponds to the predefined image, the first event detection unit 212 determines that the event has been performed on the primary electronic device 102.

In yet another embodiment, where the event corresponds to scanning of a predefined barcode, the worker may provide the input to cause the image capturing device to capture an image of the barcode. Thereafter, the first event detection unit 212 may decode the barcode in the captured image. Further, the first event detection unit 212 determines whether the decoded information corresponds to the information associated with the predefined barcode, and may detect the event on the primary electronic device 102.

In an implementation, where the event corresponds to reading a predefined RFID tag, the worker may bring the primary electronic device 102 in vicinity of the predefined RFID tag. As discussed, the primary electronic device 102 may include the RFID reader that is capable of reading RFID tags. In some examples, the predefined RFID tag may include predefined information. When the predefined information is received by the first event detection unit 212, the first event detection unit 212 detects the event on the primary electronic device 102. Therefore, when the worker of the primary electronic device 102 brings the primary electronic device 102 in vicinity of the predefined RFID tag, the first event detection unit 212 receives the predefined information. In response to receiving the predefined information, the first event detection unit 212 may detect the event on the primary electronic device 102.

In some examples, the scope of the disclosure is not limited to detecting the event based on the one or more measurements of the one or more parameters associated with the primary electronic device 102. In an alternative embodiment, the first event detection unit 212 may be configured to detect the event on the primary electronic device 102 based on a reception of an event detection signal from one of the secondary electronic devices 106. In an example embodiment, the event detection signal may be indicative of another event being detected at one of the secondary electronic devices 106. In some examples, the event on a secondary electronic device (e.g., the secondary electronic device 106a) may be detected in a similar manner as the detection of the event on the primary electronic device 102. The detection of the event on the secondary electronic devices 106 is described in conjunction with FIG. 15. In an example embodiment, the first event detection unit 212 may be configured to detect the event on the primary electronic device 102 in an instance in which the event detection signal is received from one of the secondary electronic devices 106. Accordingly, the secondary device management unit 210 may be configured to transmit the first command to each of the secondary electronic devices 106.

As discussed, the event may be detected on the secondary electronic devices 106. To enable the secondary electronic devices 106 to detect the event, the secondary electronic devices 106 may include suitable logic, circuitry, and/or programs, as is further described in conjunction with FIG. 14.

FIG. 14 illustrates a block diagram 1400 of a secondary electronic device (for example, 106a) of the secondary electronic devices 106, according to the one or more embodiments described herein. In an example embodiment, the secondary electronic device 106a includes a second processor 1402, a second memory device 1404, a second communication network interface 1406, one or more sensors 1408, a second event detection unit 1410, a second audio processing unit 1412, and a second notification generation unit 1414. In an example embodiment, the second processor 1402 is communicatively coupled to each of the second memory device 1404, the second communication network interface 1406, the one or more sensors 1408, the second event detection unit 1410, the second audio processing unit 1412, and the second notification generation unit 1414.

The second processor 1402 may be embodied as a means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit (ASIC) or field programmable gate array (FPGA), or some combination thereof. Accordingly, although illustrated in FIG. 14 as a single processor, in an embodiment, the second processor 1402 may include a plurality of processors and signal processing modules. The plurality of processors may be embodied on a single electronic device or may be distributed across a plurality of electronic devices collectively configured to function as the circuitry of the secondary electronic device 106a. The plurality of processors may be in operative communication with each other and may be collectively configured to perform one or more functionalities of the circuitry of the secondary electronic device 106a, as described herein. In an example embodiment, the second processor 1402 may be configured to execute instructions stored in the second memory device 1404 or otherwise accessible to the second processor 1402. These instructions, when executed by the second processor 1402, may cause the circuitry of the secondary electronic device 106a to perform one or more of the functionalities, as described herein.

Whether configured by hardware, firmware/software methods, or by a combination thereof, the second processor 1402 may include an entity capable of performing operations according to embodiments of the present disclosure while configured accordingly. Thus, for example, when the second processor 1402 is embodied as an ASIC, FPGA or the like, the second processor 1402 may include specifically configured hardware for conducting one or more operations described herein. Alternatively, as another example, when the second processor 1402 is embodied as an executor of instructions, such as may be stored in the second memory device 1404, the instructions may specifically configure the second processor 1402 to perform one or more algorithms and operations described herein.

Thus, the second processor 1402 used herein may refer to a programmable microprocessor, microcomputer or multiple processor chip or chips that can be configured by software instructions (applications) to perform a variety of functions, including the functions of the various embodiments described above. In some devices, multiple processors may be provided dedicated to wireless communication functions and one processor dedicated to running other applications. Software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. The memory can also be located internal to another computing resource (e.g., enabling computer readable instructions to be downloaded over the Internet or another wired or wireless connection).

The second memory device 1404 may include suitable logic, circuitry, and/or interfaces that are adapted to store a set of instructions that is executable by the second processor 1402 to perform predetermined operations. Some of the memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an embodiment, the second memory device 1404 may be integrated with the second processor 1402 on a single chip, without departing from the scope of the disclosure.

The second communication network interface 1406 may correspond to a communication network interface that may facilitate transmission and reception of messages and data to and from various devices over the first communication network 104. For example, the second communication network interface 1406 enables communication with the primary electronic device 102 over the first communication network 104. Examples of the second communication network interface 1406 may include, but are not limited to, an antenna, an Ethernet port, a USB port, a serial port, or any other port that can be adapted to receive and transmit data. The second communication network interface 1406 transmits and receives data and/or messages in accordance with the various communication protocols, such as, Bluetooth, ZigBee, Z-Wave, I2C, TCP/IP, UDP, and 2G, 3G, 4G, or 5G communication protocols.

The one or more sensors 1408 may include suitable logic and/or circuitry that may enable the one or more sensors 1408 to determine the one or more measurements of the one or more parameters associated with the secondary electronic device 106a. In an example embodiment, the one or more sensors 1408 are similar to the one or more sensors 208 in the primary electronic device 102. Further, the one or more parameters associated with the secondary electronic device 106a are also similar to the one or more parameters associated with the primary electronic device 102. For example, the one or more parameters associated with the secondary electronic device 106a include, but are not limited to, the motion parameters, the orientation parameters, and/or the audio parameters.

The second event detection unit 1410 may include suitable logic and/or circuitry that may enable the second event detection unit 1410 to detect the event on the secondary electronic device 106a. In an example embodiment, the structure and the functionalities of the second event detection unit 1410 are similar to the structure and functionalities of the first event detection unit 212. For example, the second event detection unit 1410 may be configured to detect the event on the secondary electronic device 106a based on the one or more measurements of the one or more parameters associated with the secondary electronic device 106a. The second event detection unit 1410 may utilize other circuitries, such as the second processor 1402 and second memory device 1404, to perform these actions. However, it should also be appreciated that, in some embodiments, the second event detection unit 1410 may include a separate memory, processor, specially configured Field Programmable Gate Array (FPGA), or Application Specific Integrated Circuit (ASIC) for performing the functions described herein. The second event detection unit 1410 may be implemented using hardware components of the apparatus configured by either hardware or software for implementing these planned functions.

The second audio processing unit 1412 may include suitable logic, circuitry, and/or programs that may enable the audio processing unit 1412 to process the audio signal. In an example embodiment, the functionalities and structure of the audio processing unit 1412 are similar to the structure and functionalities of the audio processing unit 214. For example, the second audio processing unit 1412 may be configured to determine whether the audio signal corresponds to the one or more template audio signals. The second audio processing unit 1412 may utilize other circuitries, such as the second processor 1402 and second memory device 1404, to perform these actions. However, it should also be appreciated that, in some embodiments, the second audio processing unit 1412 may include a separate memory, processor, specially configured Field Programmable Gate Array (FPGA), or Application Specific Integrated Circuit (ASIC) for performing the functions described herein. The second audio processing unit 1412 may be implemented using hardware components of the apparatus configured by either hardware or software for implementing these planned functions.

The second notification generation unit 1414 includes suitable logic and/or circuitry that may enable the second notification generation unit 1414 to generate the notification. In an example embodiment, the structure and the functionalities of the second notification generation unit 1414 are similar to the structure and functionalities of the first notification generation unit 216. The second notification generation unit 1414 may utilize other circuitries, such as the second processor 1402 and second memory device 1404, to perform these actions. However, it should also be appreciated that, in some embodiments, the second notification generation unit 1414 may include a separate memory, processor, specially configured Field Programmable Gate Array (FPGA), or Application Specific Integrated Circuit (ASIC) for performing the functions described herein. The second notification generation unit 1414 may be implemented using hardware components of the apparatus configured by either hardware or software for implementing these planned functions. For example, a secondary electronic device such as a scanner may generate a flashing light signal via its aimer as a notification. A secondary electronic device such as a printer may generate a flashing light signal via its LED light, generate a beeping sound, and/or cause the paper to move in its feeder as a notification. A secondary device such as a headset may generate a sound via its speaker or generate a flashing light signal via its LED light as a notification.

In an example embodiment, the notification may correspond to an audio and/or a visual indicator that may allow the worker to identify the one or more secondary electronic devices connected with the primary electronic device.

The various operations performed by the secondary electronic device 106a have been described in conjunction with FIG. 15.

FIG. 15 illustrates example flowcharts of the operations performed by an apparatus, such as the secondary electronic devices 106 of FIG. 1 and FIG. 14 in accordance with example embodiments of the present invention. It will be understood that each block of the flowcharts, and combinations of blocks in the flowcharts, may be implemented by various means, such as hardware, firmware, one or more processors, circuitry and/or other devices associated with execution of software including one or more computer program instructions. For example, one or more of the procedures described above may be embodied by computer program instructions. In this regard, the computer program instructions which embody the procedures described above may be stored by a memory of an apparatus employing an embodiment of the present invention and executed by a processor in the apparatus. As will be appreciated, any such computer program instructions may be loaded onto a computer or other programmable apparatus (e.g., hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of FIG. 15 when executed, convert a computer or processing circuitry into a particular machine configured to perform an example embodiment of the present invention. Accordingly, the operations of FIG. 15 define an algorithm for configuring a computer or processor, to perform an example embodiment. In some cases, a general purpose computer may be provided with an instance of the processor which performs the algorithm of FIG. 15 to transform the general purpose computer into a particular machine configured to perform an example embodiment.

Accordingly, blocks of the flowchart support combinations of means for performing the specified functions and combinations of operations for performing the specified functions. It will also be understood that one or more blocks of the flowcharts', and combinations of blocks in the flowchart, can be implemented by special purpose hardware-based computer systems which perform the specified functions, or combinations of special purpose hardware and computer instructions.

FIG. 15 illustrates a flowchart 1500 of a method for detecting the event on the secondary electronic device 106a, according to one or more embodiments described herein.

At step 1502, the secondary electronic device 106a may include means, such as the second processor 1402, the second communication network interface 1406, and/or the like, for establishing the connection with the primary electronic device 102. In an example embodiment, to establish the connection with the primary electronic device 102, the second communication network interface 1406 may be configured to listen for the "INQUIRY" command. As discussed above, the "INQUIRY" command corresponds to a command broadcasted by the primary electronic device 102 to initiate the one or more connections with the secondary electronic devices 106.

On receiving the "INQUIRY" command, the second communication network interface 1406 may be configured to transmit the response to the primary electronic device 102. As discussed, the response may include the alias associated with the secondary electronic device 106a, and/or the unique identification associated with the secondary electronic device 106a, based on which the primary electronic device 102 establishes the connection with the secondary electronic device 106a.

At step 1504, the secondary electronic device 106a may include means, such as the second processor 1402, the one or more sensors 1408, the second event detection unit 1410, and/or the like, for detecting the event on the secondary electronic device 106a based on the one or more measurements of the one or more parameters associated with the secondary electronic device 106a. In an example embodiment, the second event detection unit 1410 may be configured to detect the event on the secondary electronic device 106a using the methodologies described in the FIGS. 4, 6, 7, 8, 10, and 11. For example, the event detection unit 1410 may be configured to detect the event on the secondary electronic device 106a when the one or more measurements of the motion parameters represent the predefined motion of the secondary electronic device 106a, as is described above in FIGS. 7, 8, 10, and 11. In another example, the second event detection unit 1410 may be configured to detect the event when the one or more measurements of the orientation parameters of the secondary electronic device 106a correspond to the predefined orientation, as is described above in FIG. 4. In yet another example, the second event detection unit 1410 may be configured to detect the event, when the audio signal, detected by the second sensor of the one or more sensors 1408, corresponds to one of the one or more template audio signals, as is described above in conjunction with FIG. 13. In yet another example, the second event detection unit 1410 may be configured to detect the event, when the speech signal in the audio signal corresponds to the second command, as is described above in conjunction with FIG. 13.

At step 1506, the secondary electronic device 106a may include means, such as the second processor 1402, the second communication network interface 1406, the one or more sensors 1408, the second event detection unit 1410, and/or the like, for transmitting an event detection signal to the primary electronic device 102 in response to the detection of the event on the secondary electronic device 106a. In an example embodiment, the event detection signal is indicative of the detection of the event on the secondary electronic device 106a.

In some examples, in response to receiving the event detection signal, the primary electronic device 102 may be configured to detect the event on the primary electronic device 102. Accordingly, the primary electronic device 102 may transmit the first command to each of the secondary electronic devices 106, as is described above in the step 306. Additionally, the primary electronic device 102 may be configured to generate the notification that is perceivable by the worker using the primary electronic device 102. In an example embodiment, the first notification generation unit 216 may be configured to generate the notification. Similar to the notification generated on the secondary electronic devices 106, the notification generated on the primary electronic device 102 is also perceivable by the worker, which allows the worker to easily identify the primary electronic device 102 among the various primary electronic devices that might have been placed, for example, on the desk during a break period in the warehouse.

At step 1508, the secondary electronic devices 106 (including secondary electronic devices 106b and 106c) may include means, such as the second processor 1402, the second communication network interface 1406, and/or the like, for receiving the first command from the primary electronic device 102. At step 1510, the secondary electronic devices 106 include means, such as the second processor 1402, the second communication network interface 1406, the second notification generation unit 1414, and/or the like, for generating the notification. As discussed, the generation of the notification may correspond switching ON an LED in the secondary electronic devices 106, such as secondary electronic devices 106b and 106c. In alternative or additional embodiment, generating the notification may further include generating a predetermined sound that may be perceivable by the worker.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The hardware used to implement the various illustrative logics, logical blocks, modules, and circuits described in connection with the aspects disclosed herein may include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor may be any processor, controller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods may be performed by circuitry that is specific to a given function.

In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor-readable media. These instructions may be embodied by one or more processor-executable software modules that reside on the one or more non-transitory computer-readable or processor-readable storage media. Non-transitory computer-readable or processor-readable storage media may in this regard comprise any storage media that may be accessed by a computer or a processor. By way of example but not limitation, such non-transitory computer-readable or processor-readable media may include RAM, ROM, EEPROM, FLASH memory, disk storage, magnetic storage devices, or the like. Disk storage, as used herein, includes compact disc (CD), laser disc, optical disc, digital versatile disc (DVD), floppy disk, and Blu-ray disc™, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

**Claims**

1. A communication system (100) comprising:
a primary electronic device (102) and one or more secondary electronic devices (106a, 106b, and 106c), the primary electronic device (102) comprising:

a communication network interface (206) configured to utilize at least a first communication protocol to establish one or more connections with the one or more secondary electronic devices (106a, 106b, and 106c);
one or more sensors (208) configured to determine one or more measurements of one or more parameters associated with the primary electronic device (102), wherein the one or more parameters comprise at least one or more orientation parameters; and
a processor (202) communicatively coupled to the communication network interface (206) and the one or more sensors (208), wherein the processor (202) is configured to:

detect a predefined orientation of the primary electronic device when the one or more measurements of the one or more orientation parameters associated with the primary electronic device is equal to one or more predefined values associated with the predefined orientation,
detect an event if at least the one or more measurements of the one or more orientation parameters is equal to the one or more predefined values for a first predefined time period; and
on detecting the event, cause a transmission of a first command to the one or more secondary electronic devices (106a, 106b, and 106c) within a predefined proximal range of the primary electronic device (102) based on the detected event,
wherein each of the one or more secondary electronic devices is configured to generate a notification, in response to the received first command, for a second pre-defined time period, and wherein the notification comprises an audio indicator and/or a visual indicator for the second pre-defined time period to identify the one or more secondary electronic devices (106a, 106b, and 106c) connected with the primary electronic device (102).

2. The communication system (100) as claimed in claim 1, wherein the communication network interface (206) is further configured to utilize a second communication protocol to communicate with a server, wherein the first communication protocol is different from the second communication protocol.

3. The communication system (100) as claimed in claim 1, wherein the one or more parameters associated with the primary electronic device (102) further comprises: motion parameters, or audio parameters.

4. The communication system (100) as claimed in claim 3, wherein the processor (202) is configured to detect a predefined motion of the primary electronic device (102) based on one or more measurements of the one or more motion parameters.

5. The communication system (100) as claimed in claim 3, wherein the one or more sensors (208) comprise one or more first sensors configured to determine the at least one of the one or more motion parameters and/or the one or more orientation parameters.

6. The communication system (100) as claimed in claim 1, wherein the one or more sensors (208) comprise a second sensor configured to detect an audio signal.

7. The communication system (100) as claimed in claim 6, wherein the audio signal corresponds to a speech input provided by a worker using the primary electronic device (102).

8. The communication system (100) as claimed in claim 7, wherein the processor (202) is further configured to determine whether the speech input corresponds to a second command provided by the worker using the primary electronic device (102), wherein the processor (202) is further configured to determine a reception of the second command through the speech input as the event.

9. The communication system (100) as claimed in claim 6, wherein the audio signal corresponds to a sound generated in an environment around the primary electronic device (102), wherein the processor (202) is configured to determine whether the audio signal corresponds to at least one audio template of one or more audio templates, and wherein the processor (202) is configured to detect the event on the primary electronic device (102) in an instance in which the audio signal corresponds to the at least one audio template.

10. The communication system (100) as claimed in claim 1, wherein the primary electronic device (102) is devoid of a display screen.

11. A method for identifying one or more secondary electronic devices (106a, 106b, and 106c) connected to a primary electronic device (102), the method comprising:

causing, by a processor (202), one or more sensors (208) in the primary electronic device (102) to determine one or more measurements of one or more parameters associated with the primary electronic device (102), wherein the one or more parameters comprise at least one or more orientation parameters;

detecting, by the processor (202), a predefined orientation of the primary electronic device when the one or more measurements of the one or more orientation parameters associated with the primary electronic device is equal to one or more predefined values associated with the predefined orientation,

detecting, by the processor (202), an event if at least the one or more measurements of the orientation parameters is equal to the one or more predefined values for a first predefined time period; and

transmitting, on detecting the event by the processor (202), a first command to the one or more secondary electronic devices (106a, 106b, and 106c) within a predefined proximal range of the primary electronic device (102) connected to the primary electronic device (102), wherein each of the one or more secondary electronic devices generates a notification, in response to the received first command, for a second pre-defined time period, and wherein the notification comprises an audio indicator and/or a visual indicator for the second pre-defined time period to identify the one or more secondary electronic devices (106a, 106b, and 106c) connected with the primary electronic device (102).

12. The method of claim 11, wherein the one or more parameters associated with the primary electronic device (102) further comprises: motion parameters, or audio parameters.

13. The method of claim 12, further comprising detecting a predefined motion of the primary electronic device (102) based on one or more measurements of the motion parameters.

14. The method of claim 12, wherein the one or more sensors (208) comprise one or more first sensors configured to determine the at least one of the one or more motion parameters and/or the one or more orientation parameters.


**Patentansprüche**

1. Kommunikationssystem (100), umfassend:
eine primäre elektronische Vorrichtung (102) und eine oder mehrere sekundäre elektronische Vorrichtungen (106a, 106b und 106c), wobei die primäre elektronische Vorrichtung (102) Folgendes umfasst:

eine Kommunikationsnetzwerkschnittstelle (206), die dazu konfiguriert ist, mindestens ein erstes Kommunikationsprotokoll zu nutzen, um eine oder mehrere Verbindungen mit der einen oder den mehreren sekundären elektronischen Vorrichtungen (106a, 106b und 106c) aufzubauen;

einen oder mehrere Sensoren (208), die dazu konfiguriert sind, eine oder mehrere Messungen von einem oder mehreren Parametern, die mit der primären elektronischen Vorrichtung (102) verknüpft sind, zu bestimmen, wobei der eine oder mehrere Parameter mindestens einen oder mehrere Orientierungsparameter umfassen; und

einen Prozessor (202), der kommunikativ mit der Kommunikationsnetzwerkschnittstelle (206) und dem einen oder mehreren Sensoren (208) gekoppelt ist, wobei der Prozessor (202) dazu konfiguriert ist:

eine vordefinierte Orientierung der primären elektronischen Vorrichtung zu erkennen, wenn die eine oder mehrere Messungen der einen oder mehreren Orientierungsparameter, die mit der primären elektronischen Vorrichtung verknüpft sind, einem oder mehreren vordefinierten Werten entsprechen, die mit der vordefinierten Orientierung verknüpft sind,

ein Ereignis zu erkennen, wenn mindestens die eine oder mehrere Messungen des einen oder mehreren Orientierungsparametern dem einen oder mehreren vordefinierten Werten für einen ersten vordefinierten Zeitraum entsprechen; und

beim Erkennen des Ereignisses eine Übertragung eines ersten Befehls an die eine oder mehrere sekundäre elektronische Vorrichtungen (106a, 106b und 106c) innerhalb eines vordefinierten proximalen Bereichs der primären elektronischen Vorrichtung (102) basierend auf dem erkannten Ereignis zu verursachen, wobei jede der einen oder mehreren sekundären elektronischen Vorrichtungen dazu konfiguriert ist, als Reaktion auf den empfangenen ersten Befehl eine Benachrichtigung für einen zweiten vordefinierten Zeitraum zu erzeugen, und wobei die Benachrichtigung eine akustische Anzeige und/oder eine visuelle Anzeige für den zweiten vordefinierten Zeitraum umfasst, um die eine oder mehrere sekundäre elektronische Vorrichtungen (106a, 106b und 106c), die mit der primären elektronischen Vorrichtung (102) verbunden sind, zu identifizieren.

2. Kommunikationssystem (100) nach Anspruch 1, wobei die Kommunikationsnetzwerkschnittstelle (206) ferner dazu konfiguriert ist, ein zweites Kommunikationsprotokoll zum Kommunizieren mit einem Server zu nutzen, wobei sich das erste Kommunikationsprotokoll von dem zweiten Kommunikationsprotokoll unterscheidet.

3. Kommunikationssystem (100) nach Anspruch 1, wobei der eine oder mehrere mit der primären elektronischen Vorrichtung (102) verknüpften Parameter ferner Folgendes umfassen: Bewegungsparameter oder Audioparameter.

4. Kommunikationssystem (100) nach Anspruch 3, wobei der Prozessor (202) dazu konfiguriert ist, eine vordefinierte Bewegung der primären elektronischen Vorrichtung (102) basierend auf einer oder mehreren Messungen des einen oder mehrerer Bewegungsparameter zu erkennen.

5. Kommunikationssystem (100) nach Anspruch 3, wobei der eine oder mehrere Sensoren (208) einen oder mehrere erste Sensoren umfassen, die dazu konfiguriert sind, den mindestens einen des einen oder der mehreren Bewegungsparameter und/oder des einen oder der mehreren Orientierungsparameter zu bestimmen.

6. Kommunikationssystem (100) nach Anspruch 1, wobei der eine oder mehrere Sensoren (208) einen zweiten Sensor umfassen, der dazu konfiguriert ist, ein Audiosignal zu erkennen.

7. Kommunikationssystem (100) nach Anspruch 6, wobei das Audiosignal einer Spracheingabe entspricht, die von einem Arbeiter unter Verwendung der primären elektronischen Vorrichtung (102) bereitgestellt wird.

8. Kommunikationssystem (100) nach Anspruch 7, wobei der Prozessor (202) ferner dazu konfiguriert ist, zu bestimmen, ob die Spracheingabe einem zweiten Befehl entspricht, der von dem Arbeiter unter Verwendung der primären elektronischen Vorrichtung (102) bereitgestellt wird, wobei der Prozessor (202) ferner dazu konfiguriert ist, einen Empfang des zweiten Befehls über die Spracheingabe als das Ereignis zu bestimmen.

9. Kommunikationssystem (100) nach Anspruch 6, wobei das Audiosignal einem Ton entspricht, der in einer Umgebung um die primäre elektronische Vorrichtung (102) erzeugt wird, wobei der Prozessor (202) dazu konfiguriert ist, zu bestimmen, ob das Audiosignal mindestens einer Audiovorlage von einer oder mehreren Audiovorlagen entspricht, und wobei der Prozessor (202) dazu konfiguriert ist, das Ereignis an der primären elektronischen Vorrichtung (102) in einem solchen Fall zu erkennen, in welchem das Audiosignal der mindestens einen Audiovorlage entspricht.

10. Kommunikationssystem (100) nach Anspruch 1, wobei die primäre elektronische Vorrichtung (102) ohne Anzeigebildschirm ist.

11. Verfahren zum Identifizieren einer oder mehrerer mit einer primären elektronischen Vorrichtung (102) verbundenen sekundären elektronischen Vorrichtungen (106a, 106b und 106c), wobei das Verfahren umfasst:

Verursachen, dass einer oder mehrere Sensoren (208) in der primären elektronischen Vorrichtung (102) durch einen Prozessor (202) eine oder mehrere Messungen eines oder mehrerer Parameter, die mit der primären elektronischen Vorrichtung (102) verknüpft sind, bestimmen, wobei der eine oder die mehreren Parameter mindestens einen oder mehrere Orientierungsparameter umfassen;
Erkennen einer vordefinierten Orientierung der primären elektronischen Vorrichtung durch den Prozessor (202), wenn der eine oder mehrere Messwerte des einen oder mehrerer Orientierungsparameter, die mit der primären elektronischen Vorrichtung verknüpft sind, einem oder mehreren vordefinierten Werten entsprechen, die mit der vordefinierten Orientierung verknüpft sind,
Erkennen eines Ereignisses durch den Prozessor (202), wenn mindestens der eine oder mehrere Messungen der Orientierungsparameter einem oder mehreren vordefinierten Werten für einen ersten vordefinierten Zeitraum entsprechen; und
Übertragen eines ersten Befehls beim Erkennen des Ereignisses durch den Prozessor (202) an die eine oder mehrere sekundäre elektronische Vorrichtungen (106a, 106b und 106c) innerhalb eines vordefinierten proximalen Bereichs der primären elektronischen Vorrichtung (102), die mit der primären elektronischen Vorrichtung (102) verbunden sind, wobei jede der einen oder mehreren sekundären elektronischen Vorrichtungen als Reaktion auf den empfangenen ersten Befehl für einen zweiten vordefinierten Zeitraum eine Benachrichtigung erzeugt, und wobei die Benachrichtigung für den zweiten vordefinierten Zeitraum eine akustische Anzeige und/oder eine visuelle Anzeige umfasst, um die eine oder mehrere sekundären elektronischen Vorrichtungen (106a, 106b und 106c), die mit der primären elektronischen Vorrichtung (102) verbunden sind, zu identifizieren.

12. Verfahren nach Anspruch 11, wobei der eine oder die mehreren Parameter, die mit der primären elektronischen Vorrichtung (102) verknüpft sind, ferner Folgendes umfassen: Bewegungsparameter oder Audioparameter.

13. Verfahren nach Anspruch 12, ferner umfassend das Erkennen einer vordefinierten Bewegung der primären elektronischen Vorrichtung (102) basierend auf einer oder mehreren Messungen der Bewegungsparameter.

14. Verfahren nach Anspruch 12, wobei der eine oder die mehreren Sensoren (208) einen oder mehrere erste Sensoren umfassen, die dazu konfiguriert sind, den mindestens einen des einen oder mehrerer Bewegungsparameter und/oder den einen oder mehrere Orientierungsparameter zu bestimmen.

**Revendications**

1. Système de communication (100) comprenant :
un dispositif électronique principal (102) et un ou plusieurs dispositifs électroniques secondaires (106a, 106b et 106c), le dispositif électronique principal (102) comprenant :

une interface (206) de réseau de communication configurée pour utiliser au moins un premier protocole de communication pour établir une ou plusieurs connexions avec lesdits un ou plusieurs dispositifs électroniques secondaires (106a, 106b et 106c) ;
un ou plusieurs capteurs (208) configurés pour déterminer une ou plusieurs mesures d'un ou plusieurs paramètres associés au dispositif électronique principal (102), dans lequel lesdits un ou plusieurs paramètres comprennent au moins un ou plusieurs paramètres d'orientation ; et
un processeur (202) couplé de manière communicative à l'interface (206) de réseau de communication et auxdits un ou plusieurs capteurs (208), dans lequel le processeur (202) est configuré pour :

détecter une orientation prédéfinie du dispositif électronique principal lorsque lesdites une ou plusieurs mesures desdits un ou plusieurs paramètres d'orientation associés au dispositif électronique principal sont égales à une ou plusieurs valeurs prédéfinies associées à l'orientation prédéfinie,
détecter un événement si au moins lesdites une ou plusieurs mesures desdits un ou plusieurs paramètres d'orientation sont égales auxdites une ou plusieurs valeurs prédéfinies pendant une première période de temps prédéfinie ; et
lors de la détection de l'événement, provoquer une transmission d'une première commande vers lesdits un ou plusieurs dispositifs électroniques secondaires (106a, 106b et 106c) situés dans une plage de proximité prédéfinie du dispositif électronique principal (102), sur la base de l'événement détecté,
dans lequel chacun desdits un ou plusieurs dispositifs électroniques secondaires est configuré pour générer une notification, en réponse à la première commande reçue, pendant une deuxième période de temps prédéfinie, et dans lequel la notification comprend un indicateur sonore et/ou un indicateur visuel pendant cette deuxième période de temps prédéfinie pour identifier lesdits un ou plusieurs dispositifs électroniques secondaires (106a, 106b et 106c) connectés au dispositif électronique principal (102).

2. Système de communication (100) selon la revendication 1, dans lequel l'interface (206) de réseau de communication est en outre configurée pour utiliser un deuxième protocole de communication pour communiquer avec un serveur, dans lequel le premier protocole de communication est différent du deuxième protocole de communication.

3. Système de communication (100) selon la revendication 1, dans lequel lesdits un ou plusieurs paramètres associés au dispositif électronique principal (102) comprennent en outre : des paramètres de mouvement ou des paramètres sonores.

4. Système de communication (100) selon la revendication 3, dans lequel le processeur (202) est configuré pour détecter un mouvement prédéfini du dispositif électronique principal (102) sur la base d'une ou plusieurs mesures desdits un ou plusieurs paramètres de mouvement.

5. Système de communication (100) selon la revendication 3, dans lequel lesdits un ou plusieurs capteurs (208) comprennent un ou plusieurs premiers capteurs configurés pour déterminer au moins l'un desdits un ou plusieurs paramètres de mouvement et/ou desdits un ou plusieurs paramètres d'orientation.

6. Système de communication (100) selon la revendication 1, dans lequel lesdits un ou plusieurs capteurs (208) comprennent un deuxième capteur configuré pour détecter un signal sonore.

7. Système de communication (100) selon la revendication 6, dans lequel le signal sonore correspond à une entrée vocale fournie par un travailleur utilisant le dispositif électronique principal (102).

8. Système de communication (100) selon la revendication 7, dans lequel le processeur (202) est en outre configuré pour déterminer si l'entrée vocale correspond à une deuxième commande fournie par le travailleur utilisant le dispositif électronique principal (102), et dans lequel le processeur (202) est en outre configuré pour déterminer une réception de la deuxième commande via l'entrée vocale comme étant l'événement.

9. Système de communication (100) selon la revendication 6, dans lequel le signal sonore correspond à un son généré dans un environnement autour du dispositif électronique principal (102), dans lequel le processeur (202) est configuré pour déterminer si le signal sonore correspond à au moins un modèle sonore parmi un ou plusieurs modèles sonores, et dans lequel le processeur (202) est configuré pour détecter l'événement sur le dispositif électronique principal (102) dans le cas où le signal sonore correspond à l'au moins un modèle sonore.

10. Système de communication (100) selon la revendication 1, dans lequel le dispositif électronique principal (102) est dépourvu d'écran d'affichage.

11. Procédé d'identification d'un ou plusieurs dispositifs électroniques secondaires (106a, 106b et 106c) connectés à un dispositif électronique principal (102), le procédé comprenant :

la provocation, par un processeur (202), d'un ou plusieurs capteurs (208) dans le dispositif électronique principal (102) à déterminer une ou plusieurs mesures d'un ou plusieurs paramètres associés au dispositif électronique principal (102), dans lequel lesdits un ou plusieurs paramètres comprennent au moins un ou plusieurs paramètres d'orientation ;
la détection, par le processeur (202), d'une orientation prédéfinie du dispositif électronique principal lorsque lesdites une ou plusieurs mesures desdits un ou plusieurs paramètres d'orientation associés au dispositif électronique principal sont égales à une ou plusieurs valeurs prédéfinies associées à l'orientation prédéfinie, la détection, par le processeur (202), d'un événement si au moins lesdites une ou plusieurs mesures des paramètres d'orientation sont égales auxdites une ou plusieurs valeurs prédéfinies pendant une première période de temps prédéfinie ; et
la transmission, lors de la détection de l'événement par le processeur (202), d'une première commande vers lesdits un ou plusieurs dispositifs électroniques secondaires (106a, 106b et 106c) situés dans une plage de proximité prédéfinie du dispositif électronique principal (102) et connectés au dispositif électronique principal (102), dans lequel chacun desdits un ou plusieurs dispositifs électroniques secondaires génère une notification, en réponse à la première commande reçue, pendant une deuxième période de temps prédéfinie, et dans lequel la notification comprend un indicateur sonore et/ou un indicateur visuel pendant la deuxième période de temps prédéfinie pour identifier ledit un ou plusieurs dispositifs électroniques secondaires (106a, 106b et 106c) connectés au dispositif électronique principal (102).

12. Procédé selon la revendication 11, dans lequel ledit un ou plusieurs paramètres associés au dispositif électronique principal (102) comprennent en outre : des paramètres de mouvement ou des paramètres sonores.

13. Procédé selon la revendication 12, comprenant en outre la détection d'un mouvement prédéfini du dispositif électronique principal (102) sur la base d'une ou plusieurs mesures des paramètres de mouvement.

14. Procédé selon la revendication 12, dans lequel lesdits un ou plusieurs capteurs (208) comprennent un ou plusieurs premiers capteurs configurés pour déterminer au moins l'un desdits un ou plusieurs paramètres de mouvement et/ou desdits un ou plusieurs paramètres d'orientation.

FIG. 1

200

| | |
|---|---|
| FIRST PROCESSOR<br>202 | SECONDARY DEVICE<br>MANAGEMENT UNIT<br>210 |
| FIRST MEMORY DEVICE<br>204 | FIRST EVENT DETECTION<br>UNIT<br>212 |
| FIRST COMMUNICATION<br>NETWORK INTERFACE<br>206 | FIRST AUDIO<br>PROCESSING UNIT<br>214 |
| ONE OR MORE SENSORS<br>208 | FIRST NOTIFICATION<br>GENERATION UNIT<br>216 |
| | DISPLAY SCREEN<br>218 |

FIG. 2

300

302

CONNECT TO THE ONE OR MORE SECONDARY ELECTRONIC DEVICES

304

DETECT AN EVENT ON THE PRIMARY ELECTRONIC DEVICE

306

TRANSMIT THE FIRST COMMAND TO EACH OF THE ONE OR MORE SECONDARY ELECTRONIC DEVICES

FIG. 3

400

402
CAUSE THE ONE OR MORE SENSORS TO DETERMINE THE ONE OR MORE MEASUREMENTS OF THE ONE OR MORE PARAMETERS ASSOCIATED WITH THE PRIMARY ELECTRONIC DEVICE

404
NO
DETERMINE WHETHER THE ONE OR MORE MEASUREMENTS OF THE ORIENTATION PARAMETERS ARE REPRESENTATIVE OF THE PREDEFINED ORIENTATION

YES

406
NO
DETERMINE WHETHER A PREDEFINED TIME PERIOD HAS ELAPSED

YES

408
DETECT THE EVENT

FIG. 4

FIG. 5A

FIG. 5B

600

602

DETERMINE ONE OR MORE MEASUREMENTS OF THE ONE OR MORE
PARAMETERS ASSOCIATED WITH THE PRIMARY ELECTRONIC DEVICE

604

402

DETERMINING
WHETHER THE MOTION
OF THE PRIMARY ELECTRONIC DEVICE
CORRESPONDS TO THE PREDEFINED
MOTION

NO

YES

606

DETECTING THE EVENT

FIG. 6

700

**702**

DETERMINE RATE OF CHANGE OF ACCELERATION AND/OR DECELERATION

**704**

DETERMINING WHETHER THE DETERMINED RATE OF CHANGE OF ACCELERATION AND/OR THE DETERMINED RATE OF CHANGE OF DECELERATION SATISFY AN ACCELERATION RATE THRESHOLD AND/OR A DECELERATION RATE THRESHOLD

NO

**706**

DETECTING THAT THE MOTION OF THE PRIMARY ELECTRONIC DEVICE CORRESPONDS TO THE PREDEFINED MOTION

YES

**708**

DETECTING THAT THE MOTION OF THE PRIMARY ELECTRONIC DEVICE DOES NOT CORRESPOND TO THE PREDEFINED MOTION

FIG. 7

800

DETERMINING THE RATE OF CHANGE OF ACCELERATION AND/OR THE RATE OF CHANGE OF DECELERATION OVER THE PREDETERMINED TIME PERIOD — 802

DETERMINING AN ACCELERATION COUNT AND/OR DECELERATION COUNT BASED ON A COUNT OF TIMES THE RATE OF CHANGE OF ACCELERATION AND/OR THE RATE OF CHANGE OF DECELERATION SATISFY THE ACCELERATION RATE THRESHOLD AND/OR DECELERATION RATE THRESHOLD — 804

DETERMINING WHETHER THE ACCELERATION COUNT AND/OR THE DECELERATION COUNT SATISFY AN ACCELERATION COUNT THRESHOLD AND/OR DECELERATION COUNT THRESHOLD — 806

YES

NO

DETECTING THAT THE MOTION OF THE PRIMARY ELECTRONIC DEVICE CORRESPONDS TO THE PREDEFINED MOTION — 808

DETECTING THAT THE MOTION OF THE PRIMARY ELECTRONIC DEVICE DOES NOT CORRESPOND TO THE PREDEFINED MOTION — 810

FIG. 8

FIG. 9

1000

1002

DETERMINING THE ONE OR MORE MEASUREMENTS OF THE
ACCELERATION AND/OR DECELERATION

1004

ONE OR MORE MEASUREMENTS OF THE
ACCELERATION/DECELERATION OF THE PRIMARY
ELECTRONIC DEVICE SATISFY A PREDETERMINED
ACCELERATION/DECELERATION THRESHOLD

YES

NO

1006

DETECTING THAT THE MOTION OF THE PRIMARY ELECTRONIC DEVICE CORRESPONDS TO THE PREDEFINED MOTION

1008

DETECTING THAT THE MOTION OF THE PRIMARY ELECTRONIC DEVICE DOES NOT CORRESPOND TO THE PREDEFINED MOTION

FIG. 10

1100

DETERMINING A MEASUREMENT OF THE SPEED WITH THE PRIMARY ELECTRONIC DEVICE — 1102

DETERMINING WHETHER THE MEASUREMENT OF THE SPEED SATISFIES A PREDEFINED SPEED THRESHOLD — 1104

YES

NO

DETERMINING AN ORIENTATION PROFILE OF THE PRIMARY ELECTRONIC DEVICE — 1106

DETERMINING WHETHER THE ORIENTATION PROFILE OF THE PRIMARY ELECTRONIC DEVICE CORRESPONDS TO AT LEAST ONE OF A PREDEFINED ORIENTATION PROFILE STORED IN THE FIRST MEMORY DEVICE — 1108

YES

NO

DETECTING THAT THE MOTION OF THE PRIMARY ELECTRONIC DEVICE CORRESPONDS TO THE PREDEFINED MOTION — 1110

1112 — DETECTING THAT THE MOTION OF THE PRIMARY ELECTRONIC DEVICE DOES NOT CORRESPOND TO THE PREDEFINED MOTION

FIG. 11

FIG. 12

1300

1302

CAUSING THE ONE OR MORE SENSORS TO DETERMINE THE ONE OR MORE MEASUREMENTS OF THE ONE OR MORE PARAMETERS ASSOCIATED WITH THE PRIMARY ELECTRONIC DEVICE

NO

NO

1304

DETERMINING WHETHER THE AUDIO SIGNAL INCLUDES A SPEECH INPUT

NO SPEECH INPUT

SPEECH INPUT

1306

DETERMINING WHETHER THE AUDIO SIGNAL IS EQUIVALENT TO AT LEAST ONE OR MORE TEMPLATE AUDIO SIGNAL

1310

CONVERTING THE AUDIO SIGNAL TO TEXT

YES

1308

DETECTING THE EVENT ON THE PRIMARY ELECTRONIC DEVICE

1312

DETERMINING WHETHER THE TEXT CORRESPONDS TO A SECOND COMMAND

YES

1314

DETECTING THE EVENT ON THE PRIMARY ELECTRONIC DEVICE

FIG. 13

1400

SECOND PROCESSOR
1402

SECOND MEMORY DEVICE
1404

SECOND COMMUNICATION
NETWORK INTERFACE
1406

ONE OR MORE SENSORS
1408

SECOND EVENT DETECTION
UNIT
1410

SECOND AUDIO
PROCESSING UNIT
1412

SECOND NOTIFICATION
GENERATION UNIT
1414

FIG. 14

1500

```
                    ┌──────────────────────────────┐   1502
                    │  ESTABLISHING THE CONNECTION WITH THE │
                    │     PRIMARY ELECTRONIC DEVICE      │
                    └──────────────────────────────┘
                                   │
                                   ▼
                    ┌──────────────────────────────┐   1504
                    │     DETECTING THE EVENT ON THE     │
                    │  SECONDARY DEVICE BASED ON THE ONE OR │
                    │ MORE MEASUREMENTS OF THE ONE OR MORE │
                    │   PARAMETERS ASSOCIATED WITH THE   │
                    │      SECONDARY ELECTRONIC DEVICE     │
                    └──────────────────────────────┘
                                   │
                                   ▼
                    ┌──────────────────────────────┐   1506
                    │ TRANSMITTING AN EVENT DETECTION SIGNAL TO │
                    │    THE PRIMARY ELECTRONIC DEVICE, IN    │
                    │  RESPONSE TO THE DETECTION OF THE OTHER  │
                    │ EVENT ON THE SECONDARY ELECTRONIC DEVICE │
                    └──────────────────────────────┘
                                   │
                                   ▼
                    ┌──────────────────────────────┐   1508
                    │ RECEIVING THE FIRST COMMAND FROM THE │
                    │     PRIMARY ELECTRONIC DEVICE      │
                    └──────────────────────────────┘
                                   │
                                   ▼
                    ┌──────────────────────────────┐   1510
                    │     GENERATING THE NOTIFICATION     │
                    └──────────────────────────────┘
```

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017337753 A
- US 2018109889 A1
- US 2018075721 A1
- US 2013111039 A1
- US 2014173439 A1